# EUROPEAN PATENT APPLICATION

(11) **EP 4 583 481 A1**
(43) Date of publication of application: **09.07.2025**
(21) Application number: 23870231.0
(22) Date of filing: 06.09.2023
(51) Int. Cl.: H04L 41/22

(54) **MULTI-DEVICE NETWORKING SYSTEM AND METHOD, AND TERMINAL DEVICES**

(30) Priority: 30.09.2022 CN 202211216793
(71) Applicant: Huawei Technologies Co., Ltd., Shenzhen, Guangdong 518129 (CN)
(72) Inventor: CHEN, Li, Shenzhen, Guangdong 518129 (CN)
(74) Representative: Epping - Hermann - Fischer
(86) International application number: PCT/CN2023/117301
(87) International publication number: WO 2024/066992

(57) **Abstract**

This application relates to the terminal field, and discloses a multi-device networking system and method, and a terminal device, so that multi-device networking across terminal devices can be provided, to improve an interaction capability of the terminal devices in the networking, and provide better ecological experience of the terminal devices for users. The system may include at least a first terminal device, a second terminal device, and a third terminal device. The first terminal device may display a control interface based on two-level networking that includes a plurality of terminal devices. **In** view of this, the first terminal device may detect a user operation performed by a user on a terminal device displayed on the control interface, and may implement, in response to the user operation, collaborative management on another connected terminal device included in the networking. Therefore, in this application, collaborative control on terminal devices may be conveniently implemented through the control interface, for example, collaboration between the second terminal device and the third terminal device that are connected is implemented, so that multi-device collaboration in more scenarios can be met.

## Description

### CROSS-REFERENCE TO RELATED APPLICATIONS

This application claims priority to Chinese Patent Application No. 202211216793.1, filed with the China National Intellectual Property Administration on September 30, 2022 and entitled "MULTI-DEVICE NETWORKING SYSTEM AND METHOD, AND TERMINAL DEVICE", which is incorporated herein by reference in its entirety.

### TECHNICAL FIELD

Embodiments of this application relate to the field of terminal technologies, and in particular, to a multi-device networking system and method, and a terminal device.

### BACKGROUND

In recent years, with rapid development of the electronic industry and communication technologies, currently, there are more forms of intelligent terminal devices such as a mobile phone, a smart television, a smart speaker, and a smart band, making people's life increasingly intelligent. To facilitate more convenient interaction between devices, application scenarios of collaborative management after multi-device networking are increasingly widespread, for example, "HyperTerminal" including a plurality of devices that run a HarmonyOS^{®} operating system.

Currently, multi-device networking generally includes one terminal device and at least one other terminal device connected to the terminal device. It may be understood that networking varies with terminal devices. In view of this, how to improve an interaction capability of a terminal device based on distributed networking is of great research significance.

### SUMMARY

This application provides a multi-device networking system and method, and a terminal device, to provide multi-device networking across terminal devices. A terminal device in the multi-device networking can be used to conveniently implement collaborative control on another connected terminal device included in the networking, so that collaboration between the terminal devices in more scenarios can be met, to provide better ecological experience for users.

According to a first aspect, this application provides a multi-device networking system. The system may include at least a first terminal device, a second terminal device, and a third terminal device. The first terminal device is configured to display a first interface, the first interface includes a plurality of terminal device identifiers, the plurality of terminal device identifiers include an identifier of the second terminal device and an identifier of the third terminal device, and the second terminal device and the third terminal device are connected. The first terminal device is further configured to: detect a first operation on the first interface, and send a first indication message to the second terminal device in response to the first operation. The first indication message indicates the second terminal device to collaborate with the third terminal device. The second terminal device is configured to: receive the first indication message, and collaborate with the third terminal device based on the first indication message.

In the system, a control interface may be displayed on the first terminal device, and the control interface may be displayed based on multi-level networking in which the first terminal device is located. Compared with an implementation in which the first terminal device can sense only a directly connected terminal device, based on the system, the first terminal device can further sense a terminal device further connected to the directly connected terminal device, so that a larger networking ecosystem can be formed, to meet a wider range of multi-device collaboration scenarios. In addition, on the control interface of the first terminal device, collaboration between the first terminal device and a connected terminal device can be implemented, and collaborative control of another connected terminal device different from the first terminal device can also be implemented. This can reduce operation complexity in some scenarios and improve operation experience of users.

In a possible design, the first terminal device is further configured to display a second interface when determining that the second terminal device and the third terminal device have collaborated, where the second interface indicates that the second terminal device and the third terminal device have collaborated. Optionally, the second terminal device may determine, based on the first indication message of the first terminal device, that the second terminal device can collaborate with the third terminal device. In this scenario, the second terminal device may return a collaboration success response message to the first terminal device, so that the first terminal device performs updating in time to display the second interface based on the response message. Further optionally, after determining that the second terminal device can collaborate with the third terminal device, the second terminal device may further update a distributed database on the second terminal device, and synchronize an updated distributed database to the first terminal device, so that the first terminal device updates the second interface based on the updated distributed database. It should be understood that a terminal device can support display of a user interface based on a distributed database, or may update a distributed database in response to a user operation on a user interface, so that distributed networking of more terminal devices based on the distributed database can be implemented.

In this design, the first terminal device can refresh the control interface in a timely manner based on a result of collaboration between the second terminal device and the third terminal device, so that a user can learn of a structure change of distributed networking in a timely manner, so as to implement more accurate service processing and ensure user experience.

In a possible design, the first terminal device may display the first interface in a plurality of possible display manners. The first interface includes a first networking structure including the plurality of terminal device identifiers. For example, the first networking structure may include an identifier of the first terminal device and an identifier of a terminal device connected to the first terminal device. The terminal device connected to the first terminal device may include the second terminal device, and may further include the identifier of the second terminal device and an identifier of a terminal device connected to the second terminal device. A terminal device connected to the second terminal device may include the third terminal device. In the first networking structure, for the second terminal device, the second terminal device is a central device, and a device connected to the second terminal device is a peripheral device of the second terminal device. If the second terminal device is a peripheral device of the first terminal device, the first terminal device may further obtain an identifier of the device connected to the second terminal device, and use the device connected to the second terminal device as a peripheral device of the first terminal device, so as to control two connected peripheral devices in peripheral devices of the first terminal device to collaborate with each other. For ease of understanding, the first terminal device may be used as a super central device in the first networking structure, and may obtain an identifier of a peripheral device of another central device that is used as a peripheral device of the first terminal device. For example, the first terminal device may obtain, by using the second terminal device, the identifier of the third terminal device connected to the first terminal device.

Based on the first networking structure described in the foregoing design, the first terminal device may display the first interface in a display manner, for example, including but not limited to one of the following display manners:
**In** a display manner A, the first interface of the first terminal device may include the identifier of the second terminal device and the identifier of the terminal device connected to the second terminal device, where the terminal device connected to the second terminal device includes the third terminal device.

Optionally, the first interface may include only the identifier of the second terminal device and the identifier of the terminal device connected to the second terminal device, where the terminal device connected to the second terminal device includes the third terminal device. For example, in a scenario in which collaborative control needs to be performed on the second terminal device and the terminal device connected to the second terminal device, based on the control interface of the first terminal device, the system can implement displaying of the control interface that includes only the identifier of the second terminal device and the identifier of the terminal device connected to the second terminal device, so that a collaborative relationship between the second terminal device and the terminal device connected to the second terminal device is controlled conveniently on the first terminal device. It should be understood that, in this scenario, the first interface may further include a control configured to return to an interface displayed based on the first terminal device, for example, a back control, or a gesture operation or a voice instruction for returning to a previous-level display interface.

Alternatively, further optionally, the first interface does not include a device connected to the first terminal device but not connected to the second terminal device. For example, the identifier of the second terminal device may be displayed in a middle location of the first interface, and the identifier of the terminal device connected to the second terminal device may be displayed around the identifier of the second terminal device. It should be understood that the first terminal device may alternatively be used as the terminal device connected to the second terminal device, and the identifier of the first terminal device is displayed on the first interface. In this way, based on an operation performed on the identifier of the first terminal device, the user can more quickly return to a control interface displayed based on the first terminal device.

It may be understood that, before displaying the first interface, the first terminal device may further display a third interface, where the third interface may include the identifier of the first terminal device and an identifier of the terminal device connected to the first terminal device, and the terminal device connected to the first terminal device includes the second terminal device. In this case, on the third interface, the first terminal device may be configured to display the first interface when detecting an operation performed on the identifier of the second terminal device. In this way, display of different collaboration scenarios can be conveniently switched.

Therefore, a scenario-related terminal device can be displayed more accurately based on a collaboration scenario requirement, so that a terminal device for collaboration in the scenario can be found more quickly.

In a display manner B, the first interface of the first terminal device may include the identifier of the second terminal device and the identifier of the terminal device connected to the second terminal device, where the terminal device connected to the second terminal device includes the third terminal device. In addition, the first interface may include the identifier of the first terminal device and an identifier of the terminal device connected to the first terminal device, where the terminal device connected to the first terminal device includes the second terminal device.

Optionally, before displaying the first interface, the first terminal device is further configured to display a third interface, where the third interface includes the identifier of the first terminal device and the identifier of the terminal device connected to the first terminal device, and the terminal device connected to the first terminal device includes the second terminal device. In this scenario, when being configured to display the first interface, the first terminal device is specifically configured to display the first interface when detecting an operation performed on the identifier of the second terminal device. For example, the user may double-tap the identifier of the second terminal device, to display, in an expanded manner, the identifier of the terminal device connected to the second terminal device. It may be understood that, the scenario may be displayed as a more accurate collaboration scenario, to avoid affecting a collaboration operation.

Further optionally, the first interface displayed by the first terminal device may alternatively display a complete networking structure. For example, the first interface may not only display the identifier of the first terminal device and an identifier of a terminal device directly connected to the first terminal device (for example, the identifier of the second terminal device), but also display an identifier of a terminal device indirectly connected to the first terminal device (for example, the identifier of the third terminal device). For example, the first interface may be displayed as follows: The first terminal device is displayed in a middle location, the second terminal device is displayed around the first terminal device, and the third terminal device is displayed around the second terminal device. It may be understood that, in this scenario, a more comprehensive networking structure may be displayed, so that a connection status of a terminal device in the networking may be obtained more intuitively.

It may be understood that the first terminal device may select, based on information such as a service scenario and a user requirement, a manner of displaying the first interface. For example, if a quantity of terminal devices included in the networking is less than a preset data threshold, a complete networking structure may be displayed (which may be understood as displaying in an expanded manner). If a quantity of terminal devices included in the networking is greater than or equal to a preset threshold, only the identifier of the first terminal device and the identifier of the terminal device directly connected to the first terminal device may be displayed (which may be understood as displaying in a collapsed manner), and in response to an operation performed on one of the terminal devices (for example, the second terminal device), the identifier of the second terminal device and the identifier of the terminal device connected to the second terminal device may be switched for display, or the identifier of the terminal device connected to the second terminal device may continue to be displayed on a current display interface in an expanded manner.

Based on various control interfaces of the first terminal device, the first terminal device may implement collaborative management between terminal devices in response to a user operation, for example, performing collaboration or disconnecting collaboration. A scenario for collaboration between the terminal devices may include but is not limited to the following scenarios.

In a possible scenario, the first interface further indicates that the first terminal device and the second terminal device have collaborated. In this scenario, after the collaboration between the second terminal device and the third terminal device is further implemented, a collaboration scenario in which the first terminal device collaborates with the second terminal device and the second terminal device and the third terminal device have collaborated may be obtained.

In another possible scenario, the first terminal device is further configured to: detect a second operation, where the second operation indicates a first combination of collaboration devices to further collaborate with the first terminal device, and the first combination of collaboration devices indicates the second terminal device and the third terminal device that have collaborated; and display a fourth interface in response to the second operation, where the fourth interface indicates that the first terminal device has further collaborated with the first combination of collaboration devices. Optionally, if the first interface includes the identifier of the first terminal device, the second operation may be detected on the first interface. Further optionally, if the identifier of the second terminal device is displayed in a middle location of the first interface, returning to an interface on which an identifier of the first terminal device is displayed in a middle location (for example, in response to a user operation performed on the identifier of the first terminal device on the first interface or a user instruction) may be first performed, and the second operation is detected on the interface. It may be understood that, in this case, the second terminal device and the third terminal device have collaborated on the interface.

In the foregoing scenario, on the control interface of the first terminal device, collaboration between two terminal devices can be implemented, collaboration between more terminal devices can also be implemented based on an existing combined collaborative device, so that a collaboration task can be transferred between more terminal devices. Therefore, this application can meet more collaboration scenarios, and can conveniently manage collaboration between more terminal devices based on the control interface of the first terminal device, thereby obtaining better ecological use experience.

In addition, when the first terminal device is configured to display various control interfaces based on the first networking structure in which the first terminal device is located, the first networking structure may be obtained in, but not limited to, the following manners:
Manner A: In response to a search operation of the user, the first terminal device performs device scanning according to a preset scanning rule, and display the first networking structure on the first interface based on a device scanning result. For example, the preset scanning rule may be one or more pieces of information such as a user account, a device type, and a wireless communication network type. In addition, after the first terminal device finds a terminal device through scanning, the first terminal device may establish a connection to the terminal device found through scanning. For example, after the first terminal device finds the second terminal device through scanning, the first terminal device may establish a connection to the second terminal device. For example, after the second terminal device finds the third terminal device through scanning, the second terminal device may establish a connection to the third terminal device.
Manner B: The first terminal device detects a user operation on any control interface of the first terminal device, and displays a setting interface in response to the user operation. The setting interface is used to provide an entry for manually adding a terminal device. The first terminal device detects an addition operation of manually adding a terminal device by the user on the setting interface, and displays, in response to the addition operation, a control interface obtained by updating the first networking structure. An updated first networking structure includes an identifier of the manually added terminal device.

For example, the first terminal device may further receive a structural relationship for a terminal device newly added by the user in the first networking structure, to obtain a more accurate networking structure. In the updated first networking structure, a structural relationship between the identifier of the terminal device and the identifier of the first terminal device is a preset structural relationship. For example, the first terminal device may determine a structural relationship for the newly added terminal device based on a corresponding control interface. For example, on an interface on which the identifier of the first terminal device and the identifier of the terminal device connected to the first terminal device are displayed, the structural relationship for the newly added terminal device may be that the terminal device is connected to the first terminal device. For another example, on an interface that the identifier of the second terminal device and the identifier of the terminal device connected to the terminal device are displayed, the structural relationship for the newly added terminal device may be that the terminal device is connected to the second terminal device. Alternatively, the addition operation further indicates a target structural relationship for the terminal device in the updated first networking structure, and the updated first networking structure further includes the identifier of the terminal device displayed based on the target structural relationship. For example, a device identifier of the newly added terminal device and a terminal device connected to the newly added terminal device may be added to the setting interface.

Manner C: The first terminal device detects a third operation on any control interface of the first terminal device, and displays a setting interface in response to the third operation. The setting interface is used to provide an entry for manually updating a scanning rule. The first terminal device detects an addition operation that is performed by the user on the setting interface and that is used to update the scanning rule, and displays, in response to the addition operation, a control interface obtained by updating the first networking structure. An updated first networking structure includes an identifier of a terminal device found through scanning based on an updated scanning rule.

Based on the foregoing implementations, the first terminal device can implement multi-level networking through automatic scanning, receiving manual addition, or the like, and display a networking structure of the multi-level networking on the control interface of the first terminal device, to present the networking structure to the user.

As a plurality of terminal devices have collaborated, the terminal devices may perform collaborative processing on a service. For example, the following processing scenarios may be included.

In a possible collaboration scenario, in a scenario in which the first terminal device has collaborated with the second terminal device, and the second terminal device has collaborated with the third terminal device, the first terminal device is further configured to: if detecting a first instruction for instructing to process a first task, perform, in response to the first instruction, a first subtask of the first task by using the first combination of collaboration devices; and the second terminal device is further configured to: receive task data of the first subtask, and collaboratively perform the first subtask by using the second terminal device and the third terminal device.

In this design, based on the user operation implemented on the control interface of the first terminal device, when the first terminal device is in collaboration, the first terminal device can implement collaborative processing of the service according to a current service scenario of the first terminal device. This can improve user experience of using the plurality of terminal devices.

In another possible collaboration scenario, the second terminal device is further configured to: if detecting a first event used to process a second task, perform, in response to the first event, a second subtask of the second task by using the third terminal. When being configured to detect the first event used to process the second task, the second terminal device is specifically configured to: detect a first user operation on a first display interface of the second terminal device in a scenario in which the second terminal device has collaborated with the third terminal device, where the first user operation is used to generate the second task; or receive task information from the first terminal device in a scenario in which the first terminal device has collaborated with the second terminal device, and the second terminal device has collaborated with the third terminal device, where the task information indicates task data of the second task.

The second terminal device is a device with a display function, the third terminal device is a device with an audio playing function, the second task is a playing task, and the second subtask is an audio playing task of the playing task. The second terminal device is further configured to: in response to the first event, display display data of the playing task, and send audio data of the playing task to the third terminal device, so that the third terminal device performs an audio playing task on the audio data; and the third terminal device is further configured to: receive the audio data and play the audio data.

In this design, the second terminal device may receive collaborative control performed by the user on the control interface of the first terminal device, to implement collaboration with the third terminal device. In addition, the second terminal device may be used as a collaborative device of the first terminal device. In view of this, the second terminal device can collaboratively process a task from the first terminal device, or can collaboratively process a collaborative task and a task of the second terminal device with the third terminal device. This can improve user experience of using the plurality of terminal devices.

In a possible design, before being configured to display the first interface, the first terminal device is further configured to: obtain, by using the second terminal device, the identifier of the terminal device connected to the second terminal device, where the terminal device connected to the second terminal device includes the third terminal device. When the first terminal device is configured to obtain, by using the second terminal device, the identifier of the terminal device connected to the second terminal device, it can be implemented by sending a request message to the second terminal device; and receiving the identifier that is of the terminal device connected to the second terminal device and that is sent by the second terminal device based on the request message. For example, the request message may be a synchronization request message, and is used to request the second terminal device to synchronize the distributed database.

In this design, the first terminal device may further obtain, by using the terminal device connected to the first terminal device, an identifier of a terminal device further connected to the terminal device. In this way, the first terminal device can conveniently obtain a networking structure, so that more accurate control can be implemented in networking.

In a possible design, the first terminal device is further configured to: before displaying the first interface, update a distributed database on the first terminal device based on an identifier of a terminal device found through scanning and the identifier that is of the terminal device connected to the second terminal device and that is obtained by using the second terminal device, where the distributed database indicates a structural relationship between a plurality of terminal devices. It may be understood that if there is no distributed database on the first terminal device, the distributed database may be first created. When being configured to display the first interface, the first terminal device is specifically configured to display the first interface based on the structural relationship.

In this design, the first terminal device can support display of the control interface by updating the distributed database. Therefore, the system can implement more levels of distributed networking based on distributed data.

In a possible design, before updating the distributed database on the first terminal device, the first terminal device is further configured to: perform device scanning, where a device found through scanning includes the second terminal device; and send a synchronization request message to the second terminal device. The second terminal device is further configured to: send a first database synchronization message to the first terminal device after receiving the synchronization request message; or start device scanning based on the synchronization request message, first write a terminal device found through scanning into the distributed database of the second terminal device, send the first database synchronization message to the first terminal device. The first database synchronization message includes an identifier of a terminal device in the distributed database on the second terminal device, and the distributed database on the second terminal device includes the identifier of the terminal device connected to the second terminal device. Then, the first terminal device is further configured to receive the first database synchronization message sent by the second terminal device. When being configured to update the distributed database on the first terminal device, the first terminal device is specifically configured to update, to the distributed database on the first terminal device, the identifier of the terminal device connected to the second terminal device in the first database synchronization message, and a relationship of connection between the identifier of the terminal device connected to the second terminal device and the second terminal device.

In this design, in distributed networking, the first terminal device may synchronize a distributed database with a connected terminal device, so that the first terminal device can sense a change of a structural relationship of the connected terminal device in time, and can update a control interface in time based on the synchronized distributed database, to avoid affecting collaboration experience of the user.

In a possible design, when being configured to display the first interface, the first terminal device is specifically configured to display the first interface based on a distributed database on the first terminal device, where the distributed database indicates a structural relationship between a plurality of terminal devices. When being configured to display the second interface, the first terminal device is specifically configured to: receive a second database synchronization message sent by the second terminal device, where the second database synchronization message indicates that the second terminal device and the third terminal device have collaborated; update the distributed database based on the second database synchronization message; and display the second interface based on an updated distributed database.

In this design, in distributed networking, when a distributed database of a terminal device connected to the first terminal device is updated due to collaboration, device offline, or the like, the distributed database may be synchronized to the first terminal device after each update or periodically, so that the first terminal device can sense a change of a structural relationship of the connected terminal device in time, and a control interface can be updated in time based on the synchronized distributed database, to avoid affecting collaboration experience of the user.

In a possible design, the system further includes a fourth terminal device and a fifth terminal device. The first terminal device is further configured to display a fifth interface, where the fifth interface includes a plurality of terminal device identifiers, the plurality of terminal device identifiers include an identifier of the fourth terminal device and an identifier of the fifth terminal device, and the fourth terminal device and the fifth terminal device are connected. The first terminal device is further configured to detect a third operation on the fifth interface, where the third operation indicates the fourth terminal device to collaborate with the fifth terminal device. The first terminal device is further configured to display a sixth interface when determining that collaboration between the fourth terminal device and the fifth terminal device is unachievable, where the sixth interface indicates that the fourth terminal device fails to collaborate with the fifth terminal device.

In this design, in the system, when collaboration of another terminal device is controlled based on the control interface of the first terminal device, there may be a scenario in which the collaboration succeeds. As described above, there may also be a scenario in which the collaboration fails. When determining that collaboration in response to a user operation fails, the first terminal device may indicate the user on the control interface, to avoid affecting user experience. In addition, as the first terminal device in the system can sense a device status of the connected terminal device, the user can be reminded in time, and a conflict with existing collaboration of the terminal device can also be avoided. For example, a terminal device being collaborated is preempted, causing a service being collaborated to be interrupted.

In a possible design, when being configured to determine that collaboration between the fourth terminal device and the fifth terminal device is unachievable, the first terminal device is specifically configured to: determine, based on one or more of a device type of the fourth terminal device, a device status of the fourth terminal device, a device type of the fifth terminal device, or a device status of the fifth terminal device, that collaboration between the fourth terminal device and the fifth terminal device is unachievable.

In this design, based on a type or a device status that is of the connected terminal device and that is sensed by the first terminal device, when it is determined that a reason such as a type conflict, device busy, or device offline is met, the user may be indicated in time or service processing of the terminal device may be prevented from being affected.

In a possible design, the first terminal device is specifically configured to: when determining, based on the device status of the fourth terminal device, that the fourth terminal device is in a collaborative state, determine that collaboration between the fourth terminal device and the fifth terminal device is unachievable; or when determining, based on the device status of the fifth terminal device, that the fifth terminal device is in a collaborative state, determine that collaboration between the fourth terminal device and the fifth terminal device is unachievable.

In this design, one terminal device may be found, through scanning, by a plurality of terminal devices in different networking structures (for example, a plurality of super central devices belonging to different networking) and connected to the terminal devices, so that service processing can be started more quickly when service processing needs to be performed. In addition, in the system, as the first terminal device can sense the device status of the connected terminal device, a collaboration result may be indicated to the user in time in a scenario in which the connected terminal device is occupied by another networking. This ensures user experience.

In a possible design, the identifier that is of the fourth terminal device and that is included on the fifth interface is displayed in a preset effect; and/or the identifier that is of the fifth terminal device and that is included on the fifth interface is displayed in a preset effect, where the preset effect indicates that the terminal device is in a collaboration-unachievable state. For example, display may be performed in a preset display manner (a gray background, a blurring effect, or the like), or the preset effect indicates that the first networking structure does not include the identifier of the second terminal device or the identifier of the third terminal device.

In this design, on a control interface of the first terminal device, a structural relationship between terminal devices in networking can be presented to the user by using different display effects, to ensure user experience in performing a collaborative operation.

In a possible design, when being configured to determine that collaboration between the fourth terminal device and the fifth terminal device is unachievable, the first terminal device is specifically configured to: send a first indication message to the fourth terminal device in response to the first operation, where the first indication message indicates the fourth terminal device to collaborate with the fifth terminal device; and receive, from the fourth terminal device, information indicating that the fourth terminal device fails to collaborate with the fifth terminal device, and determine, based on the collaboration failure information, that the fourth terminal device fails to collaborate with the fifth terminal device.

In this design, the first terminal device can directly sense the device status of the connected terminal device by using the first terminal device, or can indirectly sense the device status of the connected terminal device by using the connected terminal device. Therefore, based on indication information that is returned by the connected terminal device and that indicates the collaboration result, in a scenario in which the connected terminal device is occupied by another networking, the collaboration result may be indicated to the user in time. This ensures user experience.

In a possible design, the first terminal device is a mobile phone, a tablet computer, or a notebook computer; the second terminal device is a device with a display function, for example, may be a smart television; and the third terminal device is a device with an audio playing function, for example, a speaker or earphones. In this design, a plurality of terminal devices can perform collaborative processing on a task, so that better use experience can be obtained based on types of different terminal devices.

In a possible design, the first indication message further indicates a manner of collaboration between the second terminal device and the third terminal device, and the manner of collaboration includes but is not limited to any one of the following manners: screen mirroring, application projection, audio projection, and task relay.

In this design, the system provided in this application can implement collaborative control on another terminal device by using the first terminal device, and control a manner of collaboration between other terminal devices based on at least one piece of information such as a user operation, a device type between other terminal devices, and a device status. This can further meet a requirement of the user for a manner of collaboration in a collaboration scenario.

In addition, before being configured to display the first interface, the first terminal device is further configured to determine the super central device in the first networking structure in any one of the following manners, so as to determine the first networking structure in the foregoing content:
Manner 1: The first terminal device negotiates with at least one terminal device obtained by performing device scanning by the first terminal device, and determines, based on a negotiation result, that the first terminal device is used as the super central device. For example, the first terminal device finds the second terminal device through scanning, and the first terminal device and the second terminal device may determine, through negotiation, that the first terminal device is used as the super central device. The terminal device may determine the super central device according to a preset negotiation rule.
Manner 2: The first terminal device receives super central device indication information of a seventh terminal device, and the first terminal device is determined as the super central device based on the super central device indication information, where the seventh terminal device is a terminal device in the at least one terminal device obtained by the first terminal device by performing device scanning.
Manner 3: The first terminal device displays a super central device selection interface, receives a selection operation on the super central device selection interface, and determines the first terminal device as the super central device in response to the selection operation, where the selection operation indicates the user to select the first terminal device as the super central device.

In the foregoing manners, in the system provided in this application, the super central device may be determined based on an actual requirement, so that a networking structure more suitable for a requirement scenario can be obtained, to meet more collaboration scenarios.

According to a second aspect, this application further provides a multi-device networking system. The system may include at least a first terminal device, a second terminal device, and a third terminal device. Like the system provided in the first aspect, the first terminal device may display a first interface, and may detect a first operation on the first interface. A difference from the system provided in the first aspect lies in that the first terminal device is further configured to display a seventh interface when determining that collaboration between the second terminal device and the third terminal device is unachievable, where the seventh interface indicates that collaboration between the second terminal device and the third terminal device fails. It may be understood that, with reference to the content described in the first aspect, when performing collaborative control, the first terminal device may obtain a collaborative result based on a device status of a connected terminal device, so that a more accurate collaboration scenario can be achieved.

In a possible design, when being configured to determine that collaboration between the second terminal device and the third terminal device is unachievable, the first terminal device is specifically configured to: determine, based on one or more of a device type of the second terminal device, a device status of the second terminal device, a device type of the third terminal device, or a device status of the third terminal device, that collaboration between the second terminal device and the third terminal device is unachievable.

Based on the foregoing design, the first terminal device is specifically configured to: when determining, based on the device status of the second terminal device, that the second terminal device is in a collaborative state, determine that collaboration between the second terminal device and the third terminal is unachievable; or when determining, based on the device status of the third terminal device, that the third terminal device is in a collaborative state, determine that collaboration between the second terminal device and the third terminal is unachievable.

In a possible design, the identifier that is of the second terminal device and that is included on the first interface is displayed in a preset effect; and/or the identifier that is of the third terminal device and that is included on the first interface is displayed in a preset effect, where the preset effect indicates that the terminal device is in a collaboration-unachievable state. In this design, on a control interface of the first terminal device, a structural relationship between terminal devices in networking can be presented to the user by using different display effects, to ensure user experience in performing a collaborative operation.

It may be understood that, in this aspect, for content such as a display manner of the first interface of the first terminal device, a collaborative control manner based on the control interface of the first terminal device, a manner of obtaining a first networking structure in which the first terminal device is located, and update of a distributed database, refer to descriptions in the first aspect. Details are not described in this aspect.

According to a third aspect, this application further provides a multi-device networking method. The method is applied to a first terminal device and includes: displaying a first interface, where the first interface includes a plurality of terminal device identifiers, the plurality of terminal device identifiers include an identifier of a second terminal device and an identifier of a third terminal device, and the second terminal device and the third terminal device are connected; and detecting a first operation on the first interface, and sending a first indication message to the second terminal device in response to the first operation, where the first indication message indicates the third terminal device to collaborate with the second terminal device.

In a possible design, the method further includes: displaying a second interface when determining that the second terminal device and the third terminal device have collaborated, where the second interface indicates that the second terminal device and the third terminal device have collaborated.

In a possible design, the first interface includes a first networking structure including the plurality of terminal device identifiers, the plurality of terminal device identifiers include the identifier of the second terminal device and an identifier of a terminal device connected to the second terminal device, and the terminal device connected to the second terminal device includes the third terminal device.

In a possible design, the plurality of terminal device identifiers further include an identifier of the first terminal device and an identifier of a terminal device connected to the first terminal device, and the terminal device connected to the first terminal device includes the second terminal device.

In a possible design, before displaying the first interface, the first terminal device is further configured to display a third interface, where the third interface includes the identifier of the first terminal device and the identifier of the terminal device connected to the first terminal device, and the terminal device connected to the first terminal device includes the second terminal device.

When being configured to display the first interface, the first terminal device is specifically configured to display the first interface when detecting an operation performed on the identifier of the second terminal device.

In a possible design, the first terminal device is further configured to: detect a second operation, where the second operation indicates a first combination of collaboration devices to further collaborate with the first terminal device, and the first combination of collaboration devices indicates the second terminal device and the third terminal device that have collaborated; and display a fourth interface in response to the second operation, where the fourth interface indicates that the first terminal device has further collaborated with the first combination of collaboration devices.

**In** a possible design, the first terminal device is further configured to: if detecting a first instruction for instructing to process a first task, perform, in response to the first instruction, a first subtask of the first task by using the first combination of collaboration devices.

**In** a possible design, before being configured to display the first interface, the first terminal device is further configured to: obtain, by using the second terminal device, the identifier of the terminal device connected to the second terminal device, where the terminal device connected to the second terminal device includes the third terminal device.

In a possible design, the first terminal device is further configured to: before displaying the first interface, update a distributed database on the first terminal device based on an identifier of a terminal device found through scanning and the identifier that is of the terminal device connected to the second terminal device and that is obtained by using the second terminal device, where the distributed database indicates a structural relationship between a plurality of terminal devices; and when being configured to display the first interface, the first terminal device is specifically configured to display the first interface based on the structural relationship.

In a possible design, before updating the distributed database on the first terminal device, the first terminal device is further configured to: perform device scanning, where a device found through scanning includes the second terminal device; and send a synchronization request message to the second terminal device. The first terminal device is further configured to receive a first database synchronization message sent by the second terminal device based on the synchronization request message. When being configured to update the distributed database on the first terminal device, the first terminal device is specifically configured to update, to the distributed database on the first terminal device, the identifier of the terminal device connected to the second terminal device in the first database synchronization message, and a relationship of connection between the identifier of the terminal device connected to the second terminal device and the second terminal device.

In a possible design, when being configured to display the first interface, the first terminal device is specifically configured to display the first interface based on a distributed database on the first terminal device, where the distributed database indicates a structural relationship between a plurality of terminal devices; and when being configured to display the second interface, the first terminal device is specifically configured to: receive a second database synchronization message sent by the second terminal device, where the second database synchronization message indicates that the second terminal device and the third terminal device have collaborated; update the distributed database based on the second database synchronization message; and display the second interface based on an updated distributed database.

In a possible design, the method further includes: receiving, from the second terminal device, information indicating that the second terminal device fails to collaborate with the third terminal device, and determining, based on the collaboration failure information, that the second terminal device fails to collaborate with the third terminal device; and displaying a seventh interface when determining that the second terminal device fails to collaborate with the third terminal device, where the seventh interface indicates that the second terminal device fails to collaborate with the third terminal device.

In a possible design, the method further includes: displaying a fifth interface, where the fifth interface includes a plurality of terminal device identifiers, the plurality of terminal device identifiers include an identifier of a fourth terminal device and an identifier of a fifth terminal device, and the fourth terminal device and the fifth terminal device are connected; detecting a third operation on the fifth interface, where the third operation indicates the fourth terminal device to collaborate with the fifth terminal device; and displaying a sixth interface when determining that collaboration between the fourth terminal device and the fifth terminal device is unachievable, where the sixth interface indicates that the fourth terminal device fails to collaborate with the fifth terminal device.

In a possible design, when being configured to determine that collaboration between the fourth terminal device and the fifth terminal device is unachievable, the first terminal device is specifically configured to: determine, based on one or more of a device type of the fourth terminal device, a device status of the fourth terminal device, a device type of the fifth terminal device, or a device status of the fifth terminal device, that collaboration between the fourth terminal device and the fifth terminal device is unachievable.

In a possible design, the first terminal device is specifically configured to: when determining, based on the device status of the fourth terminal device, that the fourth terminal device is in a collaborative state, determine that collaboration between the fourth terminal device and the fifth terminal device is unachievable; or when determining, based on the device status of the fifth terminal device, that the fifth terminal device is in a collaborative state, determine that collaboration between the fourth terminal device and the fifth terminal device is unachievable.

In a possible design, the identifier that is of the fourth terminal device and that is included on the fifth interface is displayed in a preset effect; and/or the identifier that is of the fifth terminal device and that is included on the fifth interface is displayed in a preset effect, where the preset effect indicates that the terminal device is in a collaboration-unachievable state.

In a possible design, when being configured to determine that collaboration between the fourth terminal device and the fifth terminal device is unachievable, the first terminal device is specifically configured to: send a first indication message to the fourth terminal device in response to the first operation, where the first indication message indicates the fourth terminal device to collaborate with the fifth terminal device; and receive, from the fourth terminal device, information indicating that the fourth terminal device fails to collaborate with the fifth terminal device, and determine, based on the collaboration failure information, that the fourth terminal device fails to collaborate with the fifth terminal device.

In a possible design, the first terminal device is a mobile phone, a tablet computer, or a notebook computer; the second terminal device is a terminal device with a display function, for example, a smart television; and the third terminal device is a terminal device with an audio playing function, for example, a speaker or earphones.

According to a fourth aspect, this application further provides a multi-device networking method. The method is applied to a second terminal device, and includes: receiving a first indication message sent by a first terminal device, where the first indication message indicates a third terminal device to collaborate with the second terminal device; and collaborating with the third terminal device based on the first indication message.

In a possible design, the second terminal device is further configured to: receive task data of a first subtask, and collaboratively perform the first subtask by using the second terminal device and the third terminal device.

In a possible design, the second terminal device is further configured to: if detecting a first event used to process a second task, perform, in response to the first event, a second subtask of the second task by using the third terminal. When being configured to detect the first event used to process the second task, the second terminal device is specifically configured to: detect a first user operation on a first display interface of the second terminal device, where the first user operation is used to generate the second task; or receive task information from the first terminal device, where the task information indicates task data of the second task.

For example, the second terminal device is a device with a display function, the third terminal device is a device with an audio playing function, the second task is a playing task, and the second subtask is an audio playing task of the playing task. For example, the second terminal device is further configured to: in response to the first event, display display data of the playing task, and send audio data of the playing task to the third terminal device, so that the third terminal device performs an audio playing task on the audio data.

**In** a possible design, the second terminal device is further configured to: send a first database synchronization message to the first terminal device after receiving a synchronization request message, where the first database synchronization message includes an identifier of a terminal device in a distributed database on the second terminal device, and the distributed database on the second terminal device includes an identifier of a terminal device connected to the second terminal device.

According to a fifth aspect, this application further provides a multi-device networking method. The method is applied to a first terminal device, and includes: displaying a first interface, where the first interface includes a plurality of terminal device identifiers, the plurality of terminal device identifiers include an identifier of a second terminal device and an identifier of a third terminal device, and the second terminal device and the third terminal device are connected; detecting a first operation on the first interface, where the first operation indicates the second terminal device to collaborate with the third terminal device; and displaying a seventh interface when determining that collaboration between the second terminal device and the third terminal device is unachievable, where the seventh interface indicates that the second terminal device fails to collaborate with the third terminal device.

In a possible design, the determining that collaboration between the second terminal device and the third terminal device is unachievable includes: determining, based on one or more of a device type of the second terminal device, a device status of the second terminal device, a device type of the third terminal device, or a device status of the third terminal device, that collaboration between the second terminal device and the third terminal device is unachievable.

In a possible design, the first terminal device is specifically configured to: when determining, based on the device status of the second terminal device, that the second terminal device is in a collaborative state, determine that collaboration between the second terminal device and the third terminal is unachievable; or when determining, based on the device status of the third terminal device, that the third terminal device is in a collaborative state, determine that collaboration between the second terminal device and the third terminal is unachievable.

In a possible design, the identifier that is of the second terminal device and that is included on the first interface is displayed in a preset effect; and/or the identifier that is of the third terminal device and that is included on the first interface is displayed in a preset effect, where the preset effect indicates that the terminal device is in a collaboration-unachievable state.

It may be understood that, in this aspect, for content such as a display manner performed by the first terminal device on the first interface of the first terminal device, a collaborative control manner based on a control interface of the first terminal device, a manner of obtaining a first networking structure in which the first terminal device is located, and update of a distributed database, refer to the method described in the third aspect. Details are not described in this aspect.

According to a sixth aspect, this application further provides a terminal device, including one or more processors and one or more memories, where the one or more memories are configured to store one or more computer programs and data information, and the one or more computer programs include instructions; and when the instructions are executed by the one or more processors, the terminal device is enabled to perform the method that can be performed by the first terminal device in any possible design of the fourth aspect, or perform the method that can be performed by the second terminal device in any possible design of the fifth aspect, or perform the method that can be performed by the first terminal device in any possible design of the sixth aspect.

According to a seventh aspect, this application further provides a terminal device, including a module/unit for performing the method in any possible design of the third aspect, any possible design of the fourth aspect, or any possible design of the fifth aspect. These modules/units may be implemented by hardware, or may be implemented by hardware executing corresponding software.

According to an eighth aspect, this application further provides a multi-device networking system, including a plurality of terminal devices according to the sixth aspect, or including a plurality of terminal devices according to the seventh aspect, for example, may include a first terminal device, a second terminal device, and a third terminal device. The plurality of terminal devices according to the sixth aspect or the plurality of terminal devices according to the seventh aspect jointly perform the method according to any possible design of the third aspect; or the plurality of terminal devices according to the sixth aspect or the plurality of terminal devices according to the seventh aspect jointly perform the method according to any possible design of the fourth aspect; or the plurality of terminal devices according to the sixth aspect or the plurality of terminal devices according to the seventh aspect jointly perform the method according to any possible design of the fifth aspect.

According to a ninth aspect, this application provides a computer-readable storage medium. The computer-readable storage medium stores a computer program (which may also be referred to as code or instructions). When the computer program is run on a computer, the computer is enabled to perform the method in any possible implementation of the third aspect, or perform the method in any possible implementation of the fourth aspect, or perform the method in any possible implementation of the fifth aspect.

According to a tenth aspect, this application provides a computer program product. The computer program product includes a computer program (which may also be referred to as code or instructions). When the computer program is run, a computer is enabled to perform the method in any possible implementation of the third aspect, or perform the method in any possible implementation of the fourth aspect, or perform the method in any possible implementation of the fifth aspect.

According to an eleventh aspect, this application further provides a graphical user interface on a terminal device. The terminal device has a display, one or more memories, and one or more processors. The one or more processors are configured to execute one or more computer programs stored in the one or more memories. The graphical user interface includes a graphical user interface displayed when the terminal device performs any possible implementation of the third aspect, any possible implementation of the fourth aspect, or any possible implementation of the fifth aspect of this application.

For beneficial effects of any one of the third aspect to the eleventh aspect, specifically refer to the beneficial effects in the possible designs of the first aspect or the second aspect. Details are not described herein again.

### BRIEF DESCRIPTION OF DRAWINGS

FIG. 1a is a radar chart of multi-device networking;
FIG. 1b is a diagram of a topology structure of multi-device networking;
FIG. 1c is a diagram of a multi-device networking scenario;
FIG. 2 is a diagram of a possible hardware structure of a terminal device according to an embodiment of this application;
FIG. 3 is a block diagram of a software structure of a terminal device according to an embodiment of this application;
FIG. 4a-1 to FIG. 4a-4 are a diagram 1 of a radar chart of multi-device networking according to an embodiment of this application;
FIG. 4b-1 to FIG. 4b-6 are a diagram 2 of a radar chart of multi-device networking according to an embodiment of this application;

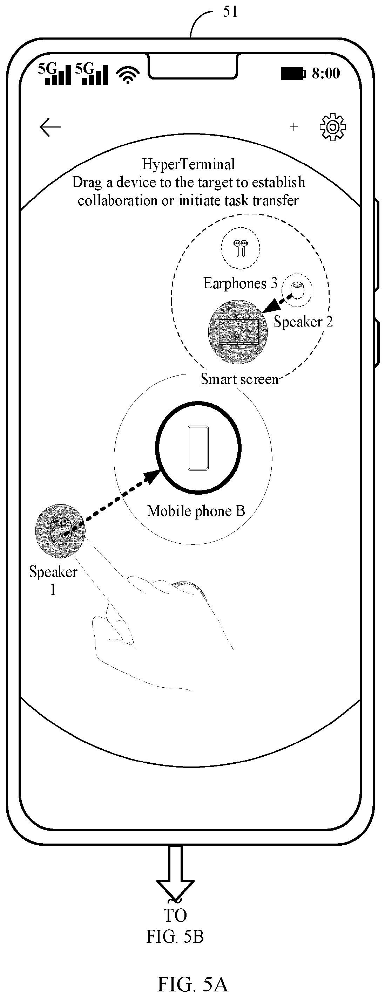

FIG. 5A to FIG. 5D are a diagram 3 of a radar chart of multi-device networking according to an embodiment of this application;

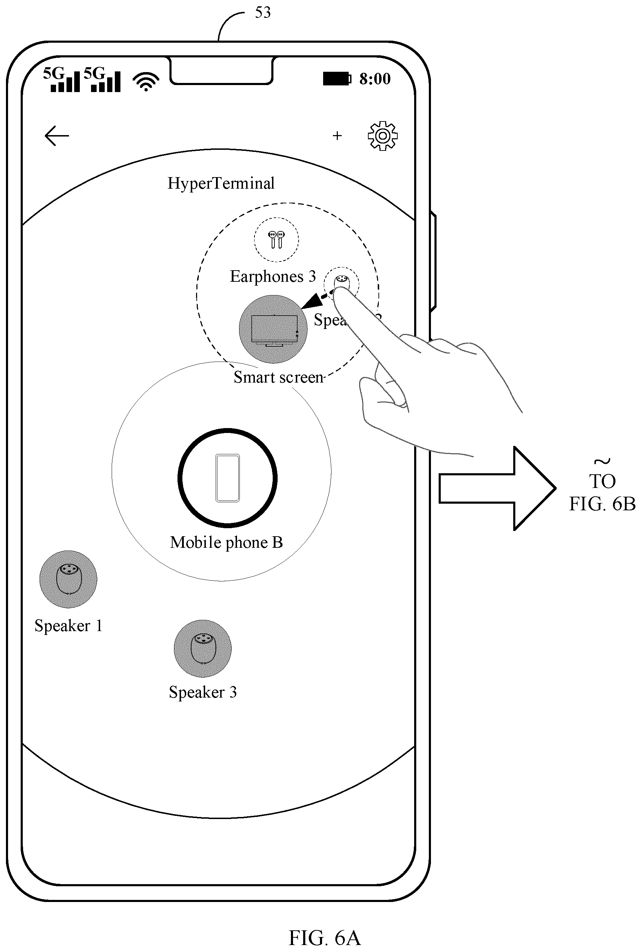

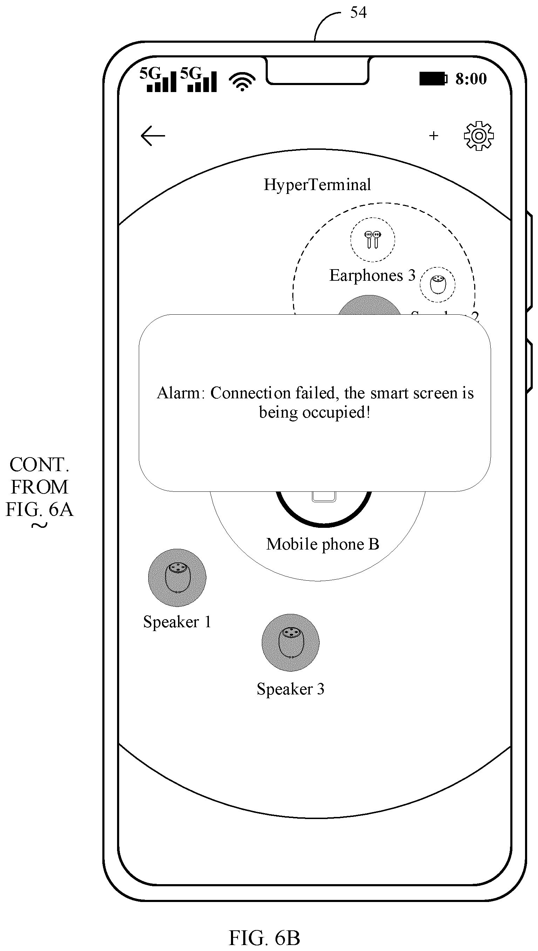

FIG. 6A and FIG. 6B are a diagram 4 of a radar chart of multi-device networking according to an embodiment of this application;

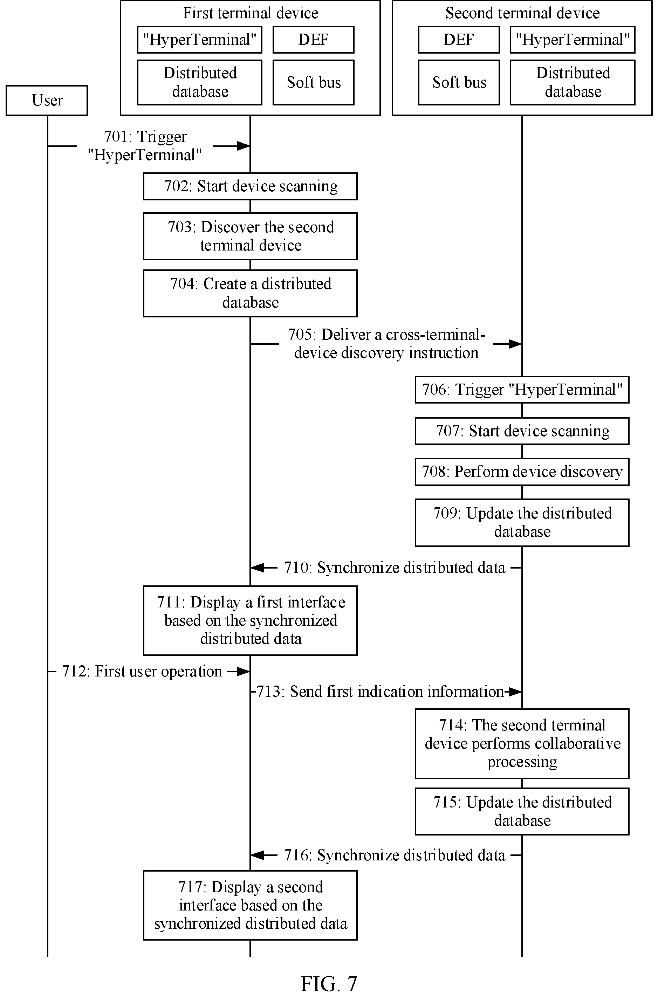

FIG. 7 is an interaction flowchart of a multi-device networking method according to an embodiment of this application; and

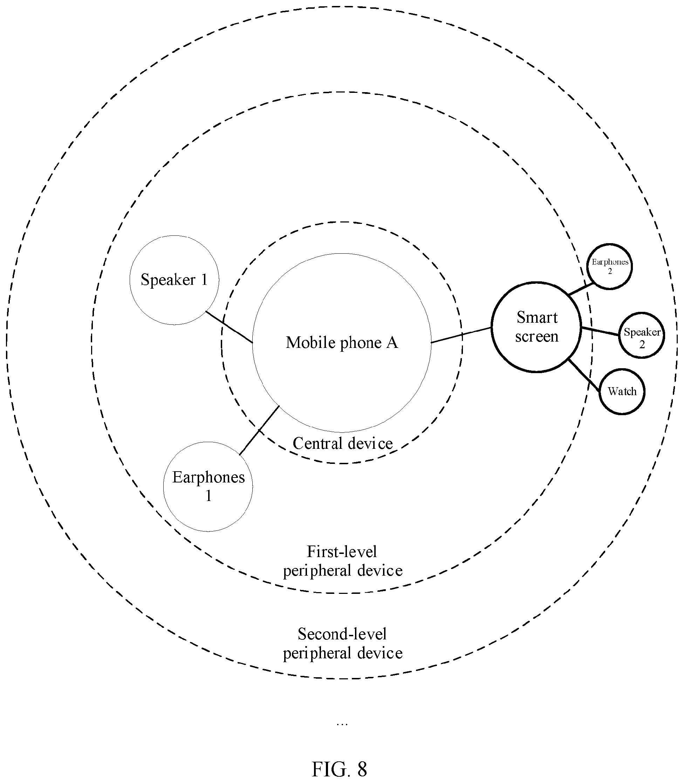

FIG. 8 is a diagram of a topology structure of multi-device networking according to an embodiment of this application.

### DESCRIPTION OF EMBODIMENTS

The following describes in detail embodiments of this application with reference to accompanying drawings.

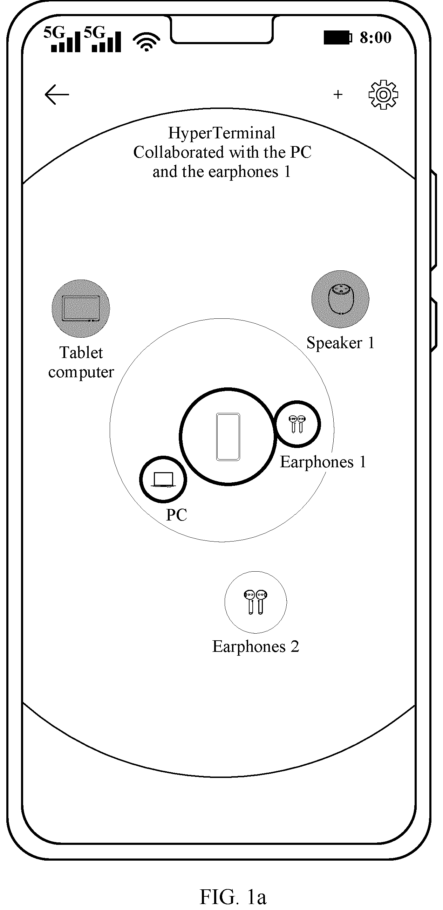

Embodiments of this application may be applied to the field of terminal technologies, and is specifically applicable to an application scenario including a plurality of terminal devices. In a possible scenario, FIG. 1a is a radar chart of multi-device networking. In a scenario shown in FIG. 1a, an example in which a mobile phone is used as a central device is used. The mobile phone may implement distributed networking with many terminal devices (for example, constitute "HyperTerminal"). In FIG. 1a, terminal devices such as a personal computer (personal computer, PC), earphones 1, earphones 2, a tablet computer, and a speaker may be used as peripheral devices of the mobile phone. In FIG. 1a, the mobile phone has collaborated with the PC and the earphones 1. The central device is a terminal device for which a user actively initiates a connection to a peripheral device. It may be understood that a connected device is a peripheral device, and the central device may be used as a control center of distributed networking shown in FIG. 1a.

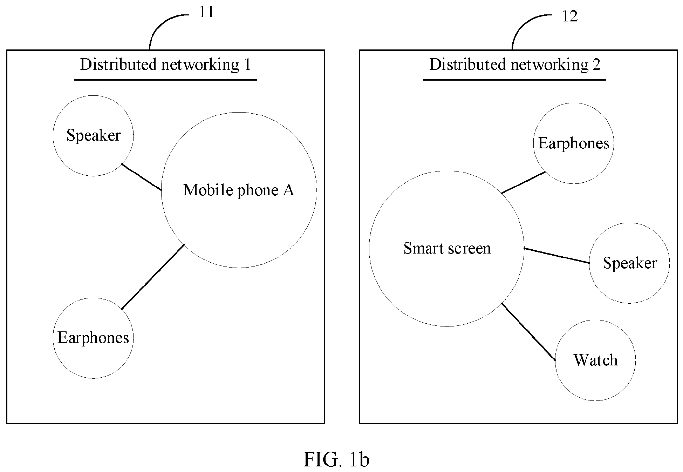

As a form and a quantity of terminal devices increase, distributed networking of the terminal devices becomes increasingly complex, and the central device may usually be switched according to different scenarios (for example, the central device may be a mobile phone, a tablet computer, a PC, a smart television (for example, a smart screen), a cockpit, or a watch). Different central devices can discover different peripheral devices. As shown in FIG. 1b, 11 in FIG. 1b shows distributed networking 1 that includes a mobile phone A as a central device and a speaker and earphones as peripheral devices; and 12 in FIG. 1b shows distributed networking 2 that includes a smart screen (which may also be referred to as a "large screen") as a central device and earphones, a speaker, and a watch as peripheral devices.

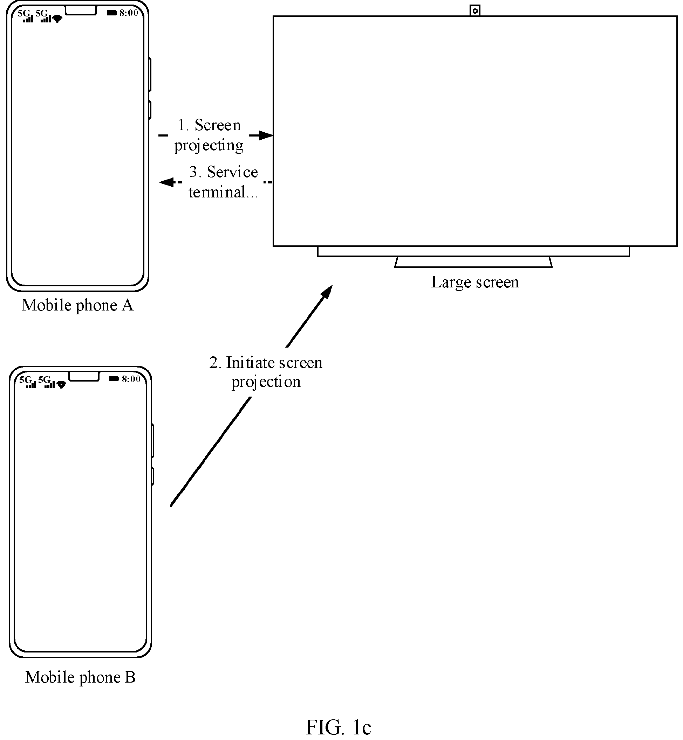

In a possible scenario, a networking feature of each distributed networking is implemented based on a central device and a device directly connected to the central device. In other words, the central device can search for only a peripheral device, but cannot sense a networking connection status of the peripheral device. In this scenario, a service conflict is likely to occur. For example, as shown in FIG. 1c, it is assumed that the mobile phone A is performing projection on a large screen, and a mobile phone B still exists. Because a networking connection status of the large screen cannot be sensed, if the mobile phone B directly performs projection on the large screen, service transmission of the mobile phone A is interrupted, and the mobile phone A does not receive any notification. This affects user experience. In addition, in some distributed networking, there may be a disadvantage of inconvenient touch of a central device. For example, in the distributed networking 2 shown in 12 in FIG. 1b, the smart screen as a central device usually cannot implement touch, and controlling needs to be performed by using a remote control device. In this scenario, a networking process of the distributed networking 2 is complex, and interaction after networking is inconvenient.

In view of this, an embodiment of this application provides a multi-device networking method. In the method, in multi-device networking, a multi-level networking structure may be constructed based on a distributed database. In the networking structure, a terminal device in distributed networking can sense basic information of a terminal device connected to the terminal device, and can also sense a terminal device further connected to the connected terminal device, so that larger distributed networking with a multi-level feature may be constituted. In addition, in the networking, collaborative control on another terminal device may be implemented on a first terminal device, so that more multi-device collaboration scenarios can be provided for the user. This further improves user experience.

Embodiments of this application may be applied to a terminal device, for example, a mobile phone, a PC, a tablet computer, a wearable device (for example, a watch or a band), a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker). It may be understood that a specific type of the terminal device is not limited in embodiments of this application.

An example embodiment of a terminal device to which embodiments of this application may be applied includes, but is not limited to, a terminal device running HarmonyOS^{®}, iOS9, Android^{®}, Microsoft^{®}, or another operating system. The portable electronic device may alternatively be another portable electronic device, for example, a laptop computer (Laptop) with a touch-sensitive surface (for example, a touch panel).

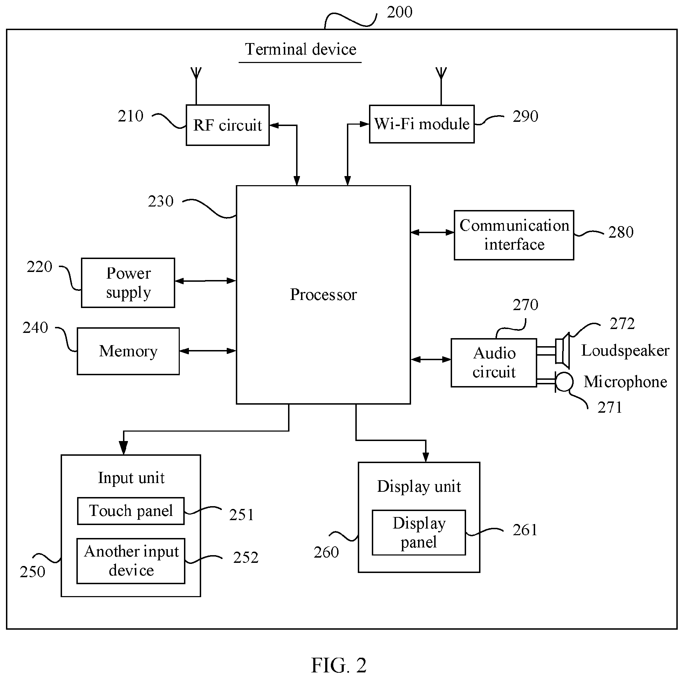

FIG. 2 is a diagram of a possible hardware structure of a terminal device. The terminal device 200 includes components such as a radio frequency (radio frequency, RF) circuit 210, a power supply 220, a processor 230, a memory 240, an input unit 250, a display unit 260, an audio circuit 270, a communication interface 280, and a wireless-fidelity (wireless-fidelity, Wi-Fi) module 290. A person skilled in the art may understand that the hardware structure of the terminal device 200 shown in FIG. 2 does not constitute a limitation on the terminal device 200. The terminal device 200 provided in this embodiment of this application may include more or fewer components than those shown in the figure, or a combination of two or more components, or a different component layout. The various components shown in FIG. 2 may be implemented in hardware including one or more signal processing circuits and/or application-specific integrated circuits, software, or a combination of hardware and software.

The following specifically describes each component of the terminal device 200 with reference to FIG. 2.

The RF circuit 210 may be configured to: receive and send data in a communication or call process. Specifically, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), and a duplexer.

In addition, the RF circuit 210 may communicate with another device through a wireless communication network. The wireless communication may use any communication standard or protocol, including but not limited to global system for mobile communications (global system of mobile communications, GSM), general packet radio service (general packet radio service, GPRS), and code division multiple access (code division multiple access, CDMA), wideband code division multiple access (wideband code division multiple access, WCDMA), long term evolution (long term evolution, LTE), email, short message service (short message service, SMS), and the like.

A Wi-Fi technology belongs to a short-distance wireless transmission technology. The terminal device 200 may be connected to an access point (access point, AP) by using the Wi-Fi module 290, to implement access to a data network. The Wi-Fi module 290 may be configured to: receive and send data in a communication process.

The terminal device 200 may be physically connected to another device by using the communication interface 280. Optionally, the communication interface 280 is connected to a communication interface of the another device through a cable, to implement data transmission between the terminal device 200 and the another device.

The terminal device 200 can further implement a communication service, and interact with a service side device or another terminal device. Therefore, the terminal device 200 needs to have a data transmission function, that is, the terminal device 200 needs to include a communication module. Although FIG. 2 shows communication modules such as the RF circuit 210, the Wi-Fi module 290, and the communication interface 280, it may be understood that the terminal device 200 includes at least one of the foregoing components or another communication module (for example, a Bluetooth module) configured to implement communication, to transmit data.

For example, when the terminal device 200 is a mobile phone, the terminal device 200 may include the RF circuit 210, and may further include the Wi-Fi module 290, or may include a Bluetooth module (not shown in FIG. 2). When the terminal device 200 is a computer, the terminal device 200 may include the communication interface 280, and may further include the Wi-Fi module 290, or may include a Bluetooth module (not shown in FIG. 2). When the terminal device 200 is a tablet computer, the terminal device 200 may include the Wi-Fi module, or may include a Bluetooth module (not shown in FIG. 2).

The memory 240 may be configured to store a software program and a module. The processor 230 runs the software program and the module stored in the memory 240, to perform various function applications of the terminal device 200 and process data. Optionally, the memory 240 may mainly include a program storage area and a data storage area. The program storage area may store an operating system (mainly including software programs or modules respectively corresponding to a kernel layer, a system layer, an application framework layer, an application layer, and the like).

In addition, the memory 240 may include a high-speed random access memory, and may further include a non-volatile memory, for example, at least one magnetic disk storage device, a flash memory device, or another volatile solid-state storage device.

The input unit 250 may be configured to: receive editing operations of a plurality of different types of data objects such as digit or character information input by a user, and generate a button signal input related to a user setting and function control of the terminal device 200. Optionally, the input unit 250 may include a touch panel 251 and another input device 252.

The touch panel 251, also referred to as a touchscreen, may collect a touch operation performed by the user on or near the touch panel (for example, an operation performed by the user on the touch panel 251 or near the touch panel 251 by using any proper object or accessory such as a finger or a stylus), and drive a corresponding connection apparatus based on a preset program. In this embodiment of this application, as the display unit 260 may display a related editing interface corresponding to multi-device networking (for example, a control interface displayed on a first terminal device, where the control interface may include a radar chart used to reflect a multi-device networking structure); and the touch panel 251 may collect a user operation performed by the user based on the related editing interface. For example, the user operation may be a drag operation. The user may trigger, by performing the drag operation, a change of a networking structural relationship between a plurality of devices, for example, performing collaboration between terminal devices, or disconnecting the collaboration.

Optionally, the another input device 252 may include but is not limited to one or more of a physical keyboard, a function button (for example, a volume control button or a power on/off button), a tracking ball, a mouse, a joystick, and the like. For example, if a central device in distributed networking is a smart screen, the another input device 252 may be, for example, a smart remote control device.

The display unit 260 may be used to display information input by the user, information provided for the user, and various menus of the terminal device 200. The display unit 260 is a display system of the terminal device 200, and is used to present an interface to implement human-computer interaction. The display unit 260 may include a display panel 261. Optionally, the display panel 261 may be configured in a form such as a liquid crystal display (liquid crystal display, LCD) or an organic light-emitting diode (organic light-emitting diode, OLED). In this embodiment of this application, the display unit 260 may be used to display a related editing interface of multi-device networking for the user. For example, the interface may include a radar chart of "HyperTerminal" shown in FIG. 1a.

The processor 230 is a control center of the terminal device 200, connects to the components through various interfaces and lines, and runs or executes the software program and/or the module stored in the memory 240 and invokes the data stored on the memory 240, to perform various functions of the terminal device 200 and process the data, and implement a plurality of services based on the terminal device 200. In this embodiment of this application, the processor 230 may be used to implement a multi-device networking method according to an embodiment of this application.

The terminal device 200 further includes the power supply 220 (such as a battery) configured to supply power to the components. Optionally, the power supply 220 may be logically connected to the processor 230 by using a power management system, to implement functions such as charge management, discharge management, and power consumption management by using the power management system.

As shown in FIG. 2, the terminal device 200 further includes the audio circuit 270, a microphone 271, and a loudspeaker 272, and may provide an audio interface between the user and the terminal device 200. The audio circuit 270 may be configured to: convert audio data into a signal that can be identified by the loudspeaker 272, and transmit the signal to the loudspeaker 272. The loudspeaker 272 converts the signal into a sound signal for output. The microphone 271 is configured to: collect an external sound signal (for example, a sound of person speaking, or another sound), convert the collected external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210 for sending to, for example, another terminal device, or output the audio data to the memory 240 for subsequent processing.

Although not shown, the terminal device 200 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is most basic system software running on the terminal device 200. A software system of the terminal device 200 may use a layered architecture, an event-driven architecture, a microkernel architecture, a micro service architecture, or a cloud architecture. In this embodiment of this application, an operating system using a layered architecture is used as an example to describe a software system architecture of the terminal device 200.

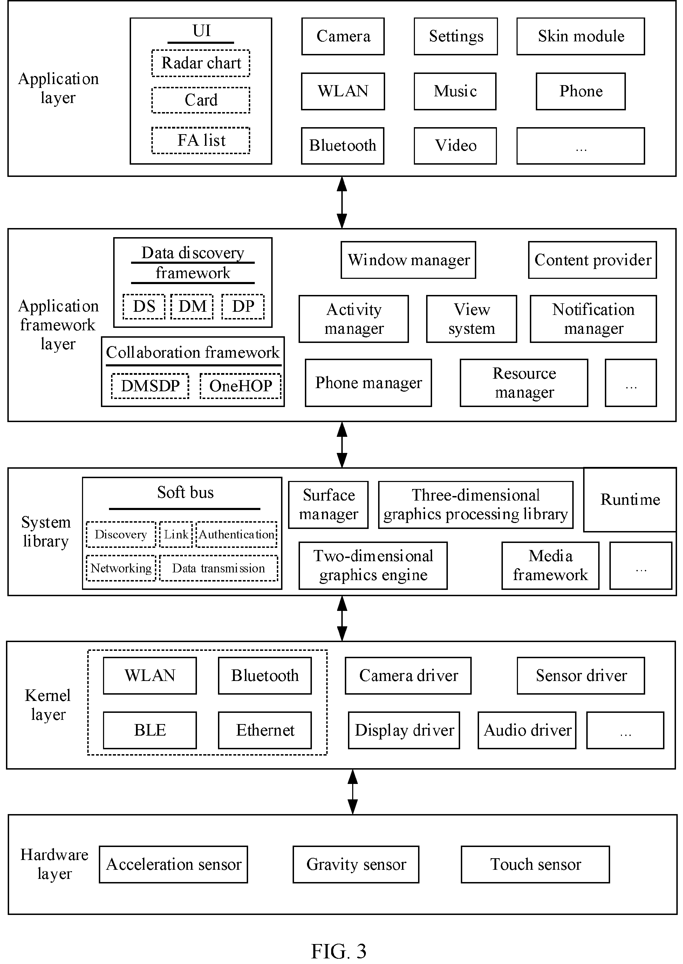

FIG. 3 is a block diagram of a software system architecture of a terminal device according to an embodiment of this application. As shown in FIG. 3, the software system architecture of the terminal device may be a layered architecture. For example, software may be divided into several layers, and each layer has a clear role and task. The layers communicate with each other through a software interface. In some embodiments, the operating system is divided into five layers: an application layer, an application framework (framework, FWK) layer, Runtime, a system library, a kernel layer, and a hardware layer from top to bottom.

The application layer (or may be briefly referred to as an "application layer") may include a series of application packages. As shown in FIG. 3, the application layer may include Camera, Settings, Skin module, a user interface (user interface, UI), a third-party application, and the like. The third-party application may include a wireless local area network (wireless local area network, WLAN), music, a call, Bluetooth, a video, and the like.

In embodiments of this application, the application layer may be configured to: implement presentation of an editing interface (for example, a UI), provide UI interaction, present a device status, implement instruction execution, and the like. The UI may provide a display interface for the user. The display interface may be used to implement a user operation in a multi-device networking scenario that is focused on in embodiments of this application. For example, the display interface may be a display interface of "HyperTerminal" in embodiments of this application, and may include, for example, a radar chart, a card, and a feature ability (feature ability, FA) list. The FA list indicates features such as a device list, so as to facilitate application in scenarios such as a cross-device list. "HyperTerminal" may also be understood as an application, and may be displayed on a page such as a notification bar.

For example, in this embodiment of this application, the application layer may present a device management capability. The device management capability may include information such as device discovery (for example, a peripheral device discovered by the terminal device, as shown in the radar chart), device binding, device collaboration (for example, displaying an effect of device collaboration between the terminal device and another terminal device in response to a drag operation of the user), status management, and device negotiation (for example, displaying a pop-up window and the like if a connection fails).

For another example, in this embodiment of this application, the application layer may implement a distributed data management function, for example, support projection between devices, a distributed camera, and device distributed connection status information.

For another example, in this embodiment of this application, the application layer may further implement an external interaction function, for example, flow task management, external service access, and device data provision.

In a possible implementation, an application may be developed by using a Java language, and is completed by invoking an application programming interface (application programming interface, API) provided by the application framework layer. A developer may interact with a bottom layer of the operating system (for example, a hardware layer or a kernel layer) by using the application framework layer (also referred to as a "framework layer"), to develop an application of the developer. The application framework layer mainly includes a series of services and management systems of the operating system.

The application framework layer provides an application programming interface and a programming framework for an application of the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interactive interface for windows of all programs.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function of the terminal device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run in a background, or may be a notification that appears on a screen in a form of a dialog window. For example, text information is prompted in the status bar, an alert tone is made, the terminal device vibrates, or an indicator blinks.

In this embodiment of this application, the application framework layer may further provide a data discovery framework and a collaboration framework. The data discovery framework is used to provide a data discovery function in a multi-device networking scenario, and may include a decision system (decision system, DS) used to perform functions such as context awareness and trusted device reporting, device manager (device manager, DM) configured to implement a device online/offline notification, a device profile (device profile, DP) used to store basic device information data, and the like. The collaboration framework is used to provide a capability of collaboration between devices. For example, a collaboration manner may include but is not limited to the following manners: distributed multi-mode sensing data platform (which may be briefly referred to as "distributed hardware management") (distributed multi-mode sensing data platform, DMSDP), OneHop (OneHop), a distributed camera controller, and the like.

For another example, although not shown in FIG. 3, in this embodiment of this application, the application framework layer may be further used to implement an All-Connect cloud network. The All-Connect cloud network is responsible for device status subscription, device status reporting, device disconnection, device service registration, and the like.

The runtime includes a kernel library and a virtual machine. The runtime is responsible for scheduling and management of the operating system.

The kernel library includes two parts: a function that needs to be invoked in Java language, and a kernel library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library (which may also be referred to as a "system service layer") may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to: manage a display subsystem and provide fusion of 2D and 3D layers for a plurality of applications.

The media framework supports playing and recording in a plurality of commonly used audio and video formats, and static image files. The media framework may support a plurality of audio and video coding formats such as MPEG-4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for two-dimensional drawing.

In some embodiments, the three-dimensional graphics processing library may be used to draw a three-dimensional motion trajectory image, and the two-dimensional graphics engine may be used to draw a two-dimensional motion trajectory image.

In this embodiment of this application, the system layer may be used to shield a difference between a protocol and communication, and provide unified system device discovery, connection, authentication, networking, transmission, cross-device instruction scheduling, data synchronization, and the like. For example, the system layer may further include a soft bus, and the soft bus is responsible for discovery, link, authentication, networking, data transmission, and the like, to support device discovery and data channel capabilities of the terminal device.

Although not shown in FIG. 3, in this embodiment of this application, the system layer may further include a distributed data management service, a tag service, a distributed execution framework (or may be referred to as "distributed scheduling") (distributed execution framework, DEF), HiChain, and the like. The distributed data management service is responsible for system-level data synchronization to implement high-reliability and low-latency distributed data interaction.

The kernel layer is a layer between hardware and software. The kernel layer includes at least a display driver, a camera driver, an audio driver, and a sensor driver. In this embodiment of this application, the kernel layer may be further understood as a protocol adaptation layer, and may be used to adapt to different protocols, so as to access different terminal devices. For example, the kernel layer may include a WLAN protocol, a Bluetooth protocol, a Bluetooth low energy (Bluetooth low energy, BLE) protocol, and an Ethernet protocol.

The hardware layer may include various sensors such as an acceleration sensor, a gravity sensor, and a touch sensor.

Generally, the terminal device 200 may run a plurality of applications simultaneously. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one item (piece) of a, b, or c may indicate a, b, c, a and b, a and c, b and c, or a, b, and c, where a, b, and c may be singular or plural. "A plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, it should be understood that, in descriptions of this application, terms such as "first" and "second" are merely used for distinguishing and description, but should not be understood as indicating or implying relative importance, or should not be understood as indicating or implying a sequence.

It should be understood that the hardware structure of the terminal device may be shown in FIG. 2, and the software system architecture may be shown in FIG. 3. A software program and/or a module corresponding to the software system architecture of the terminal device may be stored in the memory 240. The processor 230 may run the software program and an application that are stored in the memory 240, to perform a procedure of the multi-device networking method provided in embodiments of this application.

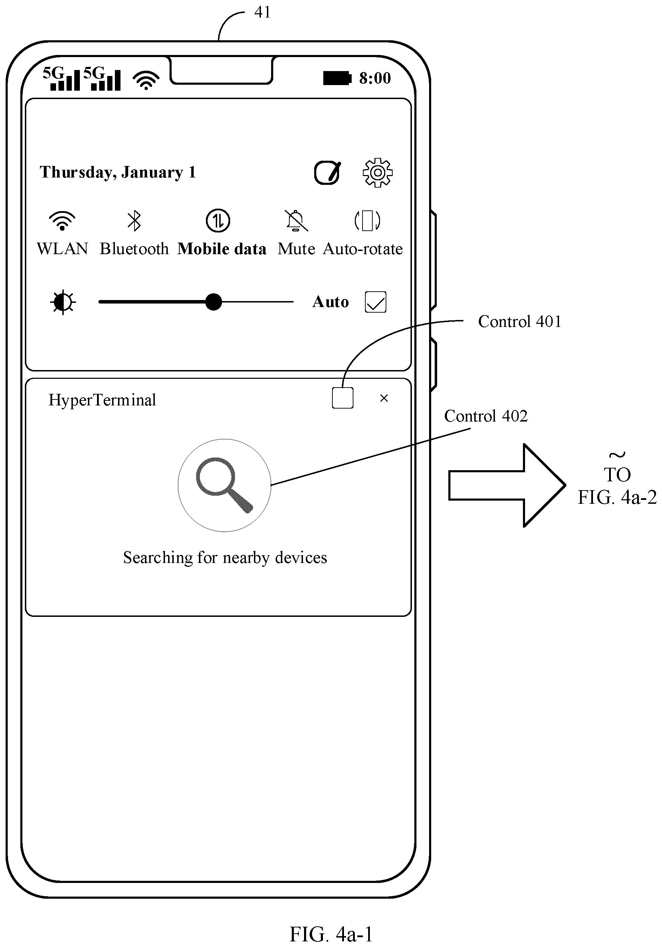

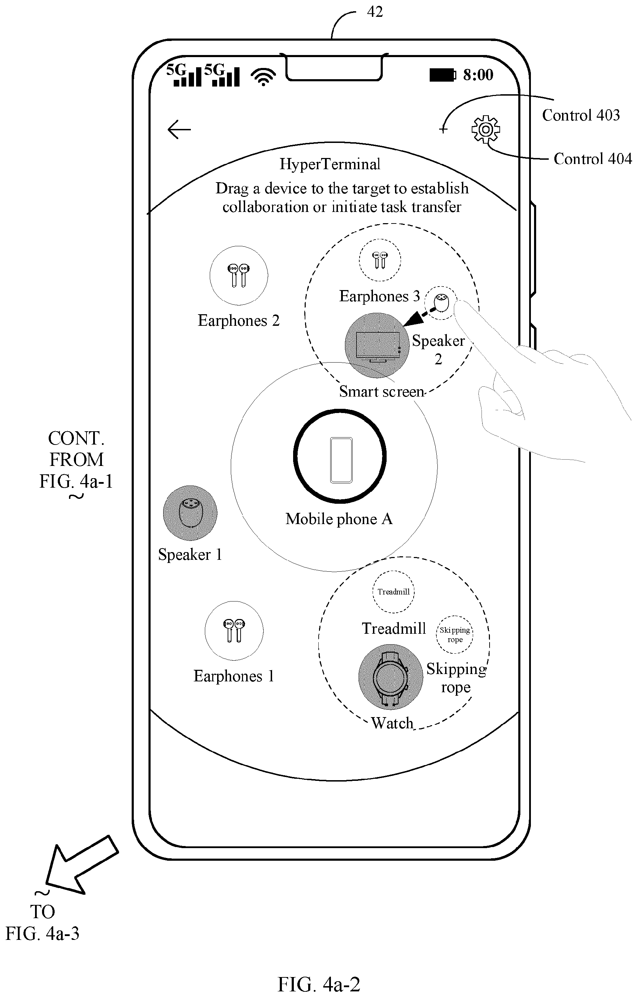

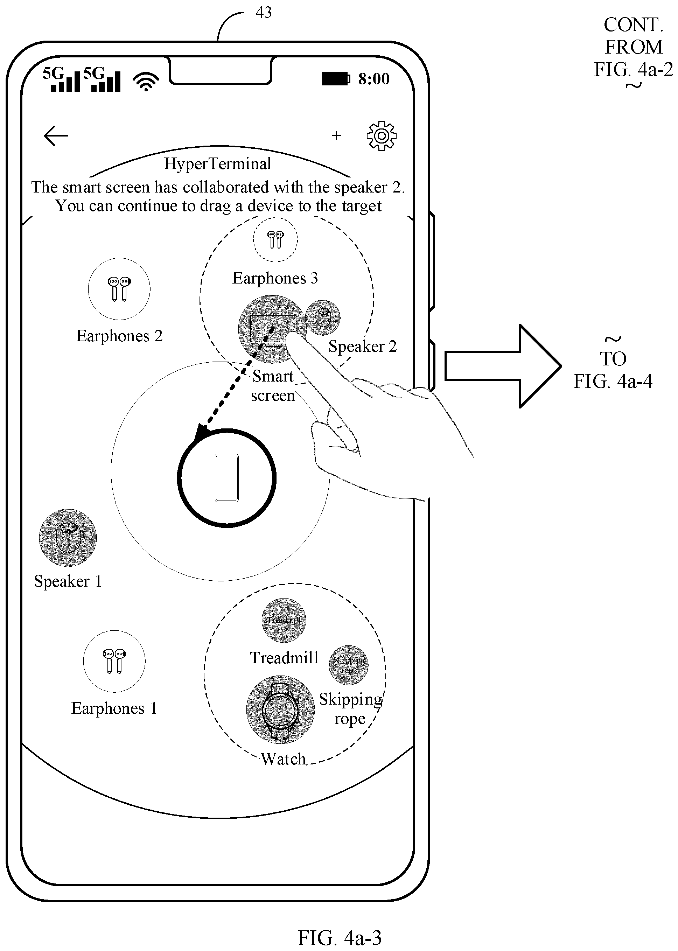

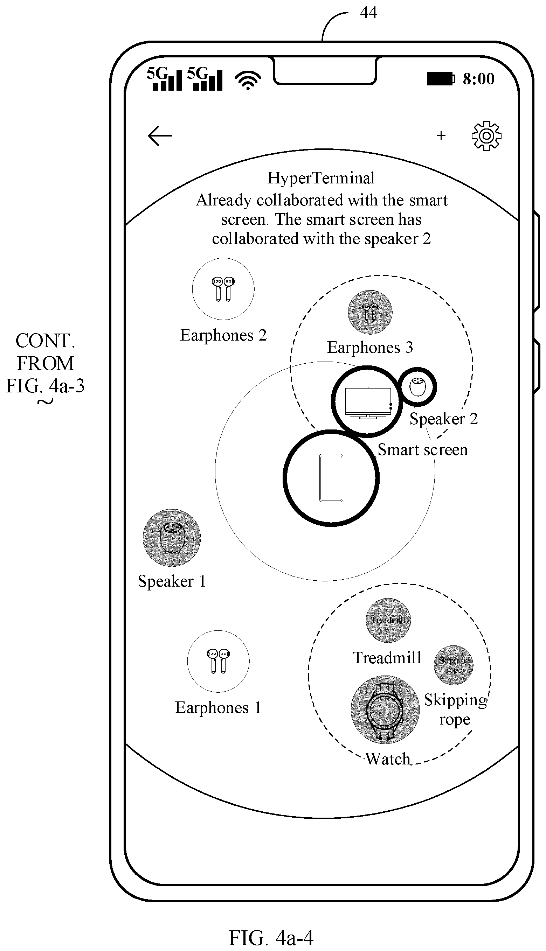

To facilitate understanding of the multi-device networking method provided in this application, the following describes, with reference to content shown in FIG. 4a-1 to FIG. 8, an implementation process of the method provided in this application.

Embodiments of this application are applicable to a scenario in which a plurality of terminal devices perform distributed networking (which may also be referred to as "multi-device networking"). Multi-device networking implemented according to the method provided in embodiments of this application can implement hierarchical networking of the plurality of terminal devices, so that more terminal devices can be constructed in same networking, to expand more scenarios of collaboration between the terminal devices. In addition, construction-based networking can be implemented, to implement more levels of service processes. A terminal device with a touch function in networking may be preferentially used as a super central device, so that multi-device networking may be constructed more conveniently on the super central device. The super central device may obtain an identifier of a peripheral device of another central device that is in a peripheral device of the super central device. For example, in the following content, the mobile phone A may be used as a super central device in a first networking structure, and the mobile phone B may be used as a super central device in a second network structure. In distributed networking, a multi-level networking structure provided in this application is described by using an example in which a first terminal device, a second terminal device, and a third terminal device are included. For the first terminal device, the first terminal device is a central device, and a device connected to the first terminal device is a peripheral device of the first terminal device. For the second terminal device, the second terminal device is a central device, and a device connected to the second terminal device is a peripheral device of the second terminal device. If the second terminal device is a peripheral device of the first terminal device, the first terminal device may further obtain an identifier of the device connected to the second terminal device, and use the device connected to the second terminal device as a peripheral device of the first terminal device, so as to control two connected peripheral devices in peripheral devices of the first terminal device to collaborate with each other.

That terminal devices are connected may indicate that a communication link has been established between the terminal devices in a wireless or wired manner. For example, a Bluetooth link may be established in a Bluetooth manner, or a Wi-Fi communication link may be established in a Wi-Fi manner, or a connection may be established via a wired link.

The following first describes the method provided in embodiments of this application with reference to a plurality of examples. It may be understood that embodiments of this application are not limited to the following examples or application scenarios.

**Step 1: Trigger to enter a multi-device networking procedure.** The mobile phone A is used as an example. During implementation of this application, a "HyperTerminal" service card may be configured on a notification bar page shown on an interface 41 in FIG. 4a-1 as a shortcut entry for triggering a multi-device networking function. "HyperTerminal" may be used to implement multi-device networking, and implement a collaborative processing capability between terminal devices based on "HyperTerminal". It may be understood that, during specific implementation, a capability of implementing multi-device networking may also be defined as another possible name in addition to "HyperTerminal". In addition to configuring a shortcut entry of "HyperTerminal" on the notification bar page of the mobile phone A, the user may configure an entry of "HyperTerminal" in a "Settings" app of the mobile phone A, an application icon on the home, or another page (for example, a left-most screen), or use a voice instruction wake-up manner to trigger entry into "HyperTerminal".

On the interface 41, the user may enter, by using a control 401, a "HyperTerminal" display interface shown as an interface 42 in FIG. 4a-2. A more detailed and comprehensive "HyperTerminal" radar display interface (or "radar chart" for short) may be displayed on the interface 42. The radar chart includes identifiers (for example, icons and/or names) of a plurality of terminal devices included in a "HyperTerminal" network. Alternatively, on the interface 41, the user may directly implement processing such as device scanning or device networking by using the control 402. In addition, as a notification bar page, the interface 41 may include some other shortcut buttons such as "WLAN", "Bluetooth", "Mobile data", "Mute/Vibration/Ring", and "Auto-rotate", may further include a progress bar for adjusting display brightness of the mobile phone A, and may further include date information, a "Shortcut button" editing control, and a "Settings" control. The top area on the interface may include a status bar (which may include a mobile network, a wireless network, time information, and remaining battery level). It may be understood that, although not shown on the interface 41, the notification bar interface may further include another shortcut button, a service card, a notification information bar, and the like, and the status bar may further include a name of an operator, a Bluetooth icon, and the like.

It should be noted that, on different types of terminal devices, manners of triggering a multi-device networking procedure may be different. For example, the multi-device networking procedure may be entered on the mobile phone A through the notification bar page, or the multi-device networking procedure may be entered on a PC by using a "PC manager" app. This is not limited in this application. It may be understood that the scenario shown in FIG. 4a-1 to FIG. 4a-4 is merely a possible example. During implementation of this application, a display manner of a distributed networking structure is not limited to the radar chart shown as FIG. 4a-1 to FIG. 4a-4, and may also be another form such as a list or a topology.

**Step 2: Device scanning and device discovery.** For example, the mobile phone A is used as a central device of "HyperTerminal". Through device scanning and device discovery, identifiers of a plurality of discovered terminal devices may be displayed in a radar chart of "HyperTerminal", so that the interface 42 is displayed. It should be noted that a display manner of an identifier of a terminal device is not limited in this application, and may be one or a combination of an icon indicating a type of the terminal device, a name of the terminal device, and the like. It should be noted that, the interface 42 is different from the radar chart shown as FIG. 1a as follows: Identifiers of a plurality of terminal devices discovered by the mobile phone A may constitute a distributed networking structure, and a hierarchical feature may be presented.

For example, as a central device, the mobile phone A may constitute distributed networking with a plurality of peripheral devices. The peripheral devices of the mobile phone A have a multi-level feature. The mobile phone A may scan and discover a plurality of terminal devices that are directly connected to the mobile phone A, and the plurality of terminal devices may be used as first-level peripheral devices of the mobile phone A. For example, the earphones 1, a speaker 1, the earphones 2, a smart screen, and a watch that are included on the interface 42 are first-level peripheral devices of the mobile phone A. In addition, the first-level peripheral devices of the mobile phone A may be directly connected to a plurality of terminal devices around the first-level peripheral devices through device scanning and device discovery, and the plurality of terminal devices may be used as peripheral devices (which may also be referred to as "second-level peripheral devices" in embodiments of this application) of the peripheral devices of the mobile phone A. For example, on the interface 42, earphones 3 and a speaker 2 are first-level peripheral devices of the smart screen and second-level peripheral devices of the mobile phone A; and on the interface 42, a treadmill and a skipping rope are first-level peripheral devices of the watch and second-level peripheral devices of the mobile phone A. Although not shown on the interface 42, during specific implementation, the second-level peripheral devices of the mobile phone A may continue to scan and discover a third-level peripheral device, and so on. The mobile phone A may display a networking structure with at least two levels. It may be understood that, other than the first-level peripheral device, another-level peripheral device is a terminal device that is indirectly connected to the central device through at least one terminal device. For example, the second-level peripheral device is a terminal device that is indirectly connected to the central device through one terminal device. For another example, the third-level peripheral device is a terminal device that is indirectly connected to the central device through two terminal devices.

For another example, when the mobile phone A scans and discovers the plurality of terminal devices as first-level peripheral devices of the mobile phone A, if the discovered terminal device has established distributed networking as a central device (for example, the smart screen on the interface 42 has established distributed networking with the earphones 3 and the speaker 2 before being discovered by the mobile phone A), after the mobile phone A scans and discovers the smart screen, the smart screen may be used as a first-level peripheral device of the mobile phone A, and an original peripheral device of the smart screen may be further used as a second-level peripheral device of the mobile phone A. It may be understood that, in this example, during creation of "HyperTerminal", the mobile phone A may be integrated with existing distributed networking, to constitute larger distributed networking and implement collaboration in more scenarios. For example, when networking control is performed on the smart screen, the smart screen may still control distributed networking in which the smart screen is used as a central device and the earphones 3 and the speaker 2 are used as peripheral devices.

The mobile phone A may implement device scanning and device discovery through Bluetooth or Wi-Fi or in a wired manner, and establish a communication link to a discovered device after the device is successfully discovered. The communication link may be a Bluetooth link, a Wi-Fi link, a wired link, or the like.

In addition, on the interface 42, the terminal device may receive a user operation performed by the user on a control 403, to manually add a required terminal device.

For example, the user may manually add, for the mobile phone A by using the control 403, another terminal device that is not found through scanning. For example, it is assumed that a device scanning rule of the mobile phone A is that, for terminal devices that log in to a same user account, the user may manually add, by using the control 403, the mobile phone B that logs in to another user account and that cannot be found through scanning. Information such as a media access control (media access control, MAC) address or an internet protocol (internet protocol, IP) address of the mobile phone B may be added, to add the mobile phone B. Optionally, a networking structure with a multi-level feature may be provided based on embodiments of this application. In a scenario in which the user manually adds the mobile phone B to a networking structure of the mobile phone A, the mobile phone B that is manually added may be used as a first-level peripheral device of the mobile phone A by default. Alternatively, when the information such as the MAC address or the IP address of the mobile phone B is added, a structural relationship for the mobile phone B in the networking structure of the mobile phone A may be synchronously added. For example, the mobile phone B may be used as a peripheral device of the smart screen (namely, a second-level peripheral device of the mobile phone A). In addition, it is assumed that the user actively adds the mobile phone B on the mobile phone A by using the control 403. To ensure device security, verification information may be sent to the mobile phone B. For example, reliability between the mobile phone A and the mobile phone B may be verified by displaying a pop-up window on the mobile phone B, inputting a personal identification number (personal identification number, PIN), or the like.

For another example, the user may further update a device scanning rule for the mobile phone A by using the control 403, for example, manually add account information of another user account (for example, a user account of a family member) or wireless network information (for example, another WLAN network used in a home scenario), so that the mobile phone A can obtain more terminal devices through device scanning, to implement multi-user multi-device networking in the home scenario. Optionally, in order to ensure device security, after performing device scanning and device discovery based on an updated device scanning rule, the terminal device may further send verification information to a discovered terminal device. Multi-device networking can be completed only after the verification succeeds.

It may be understood that, after receiving and responding to a manual addition operation of the user, the mobile phone A may further store related terminal device information or user account information, so that device scanning and device discovery may be performed based on the stored information when multi-device networking is performed next time. Optionally, for the information manually added by the user, the mobile phone A may further configure a specific verification period. In the verification period, user authentication may not be required. If the verification period is exceeded, the user needs to perform secondary authentication, for example, re-input a password of a user account, or send an authentication request to a peer terminal device or any terminal device to which a peer user account logs in.

Alternatively, on the interface 42, the terminal device may further provide a control 404 for the user, so that the user performs a related setting on "HyperTerminal". For example, the terminal device may detect a user operation performed by the user on the control 404 (for example, a tap operation or a voice instruction), and provide a setting interface for the user in response to the user operation. The setting interface may include a scanning rule specified by the user to find a terminal device through scanning. For example, the user sets, on the setting interface, one or a combination of user account information and wireless network information that can be found by the terminal device through scanning, so that the terminal device can perform device scanning and device discovery on a terminal device that logs in to the user account information and/or the wireless network information. Optionally, in order to ensure device security, when the scanning rule is set, the user account information and the wireless network information may be verified (for example, an account password and a wireless network password are verified). If the verification succeeds, device scanning and device discovery may continue to be performed. Alternatively, further optionally, in order to further improve device security, device verification may be further performed after a terminal device is found through scanning. Multi-device networking can be completed only after the device verification.

It should be noted that, when the user performs setting by using an interface corresponding to the control 403 or a setting interface corresponding to the control 404, in addition to manually inputting related user account information and wireless network information, the user may implement quick setting in combination with a manner such as automatic scanning or automatic filling. For example, on the setting interface corresponding to the control 404, when the user adds wireless network information, the terminal device may scan surrounding WLAN, and provide a list of scanning results for the user to select, based on the list of scanning results, wireless network information that needs to be added.

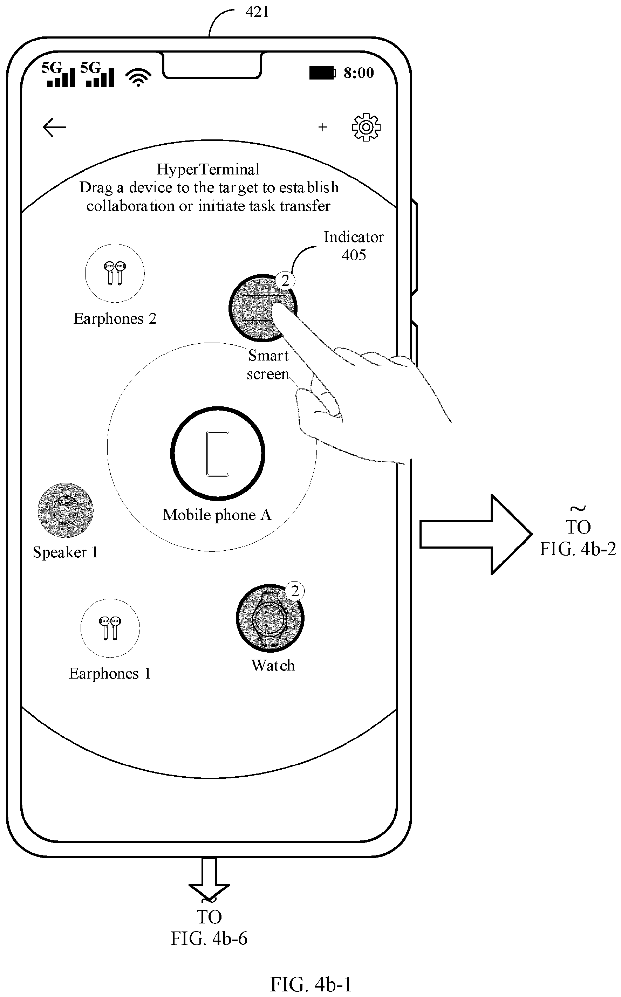

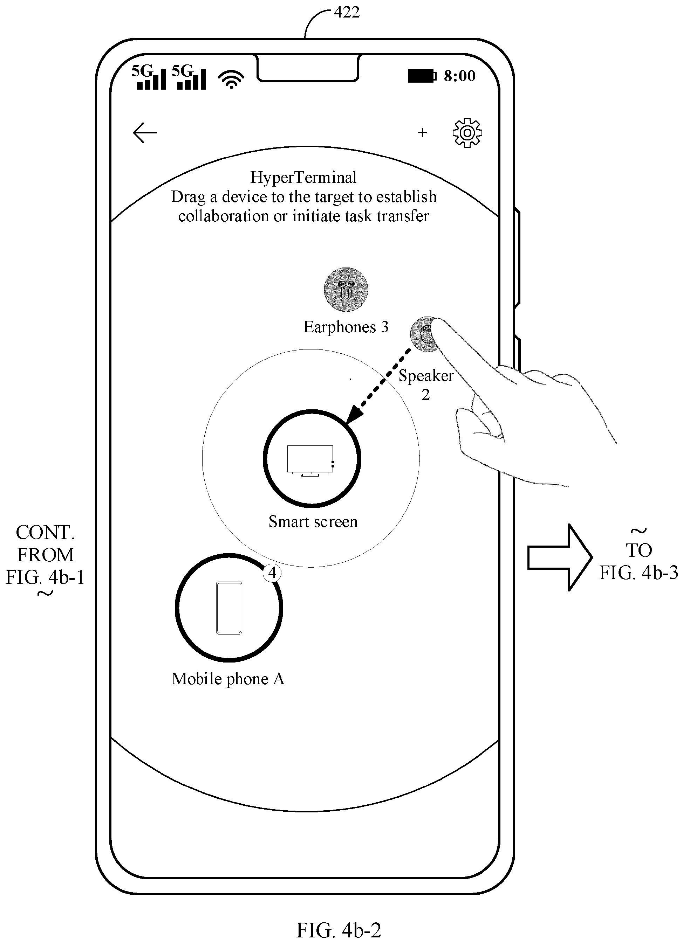

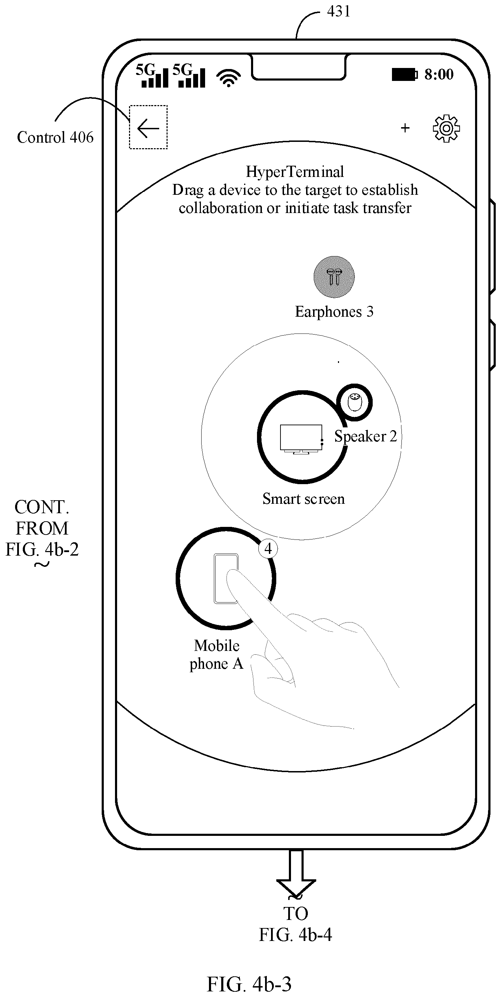

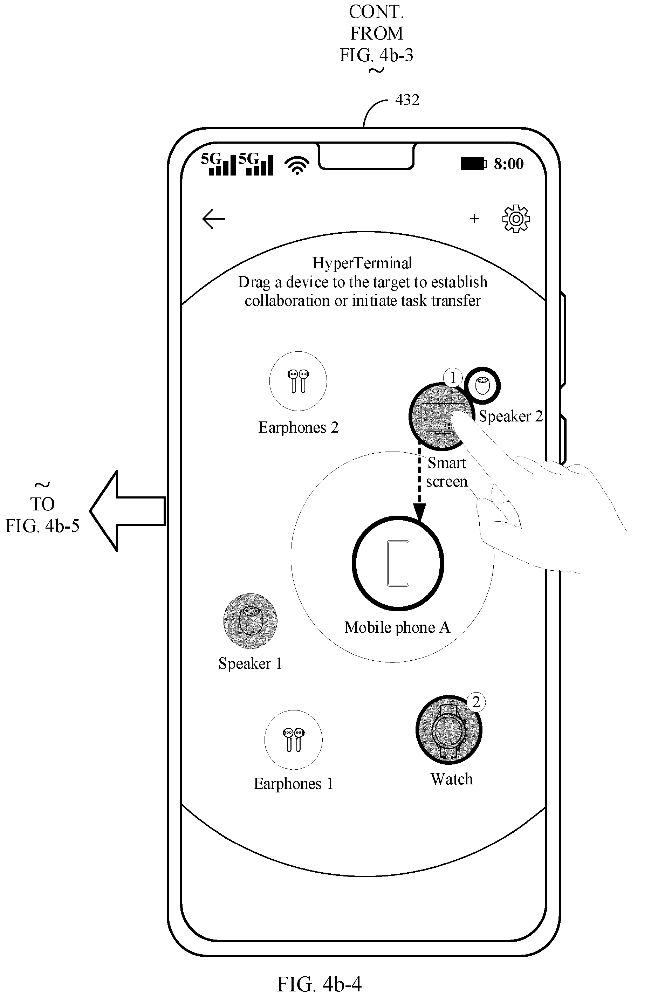

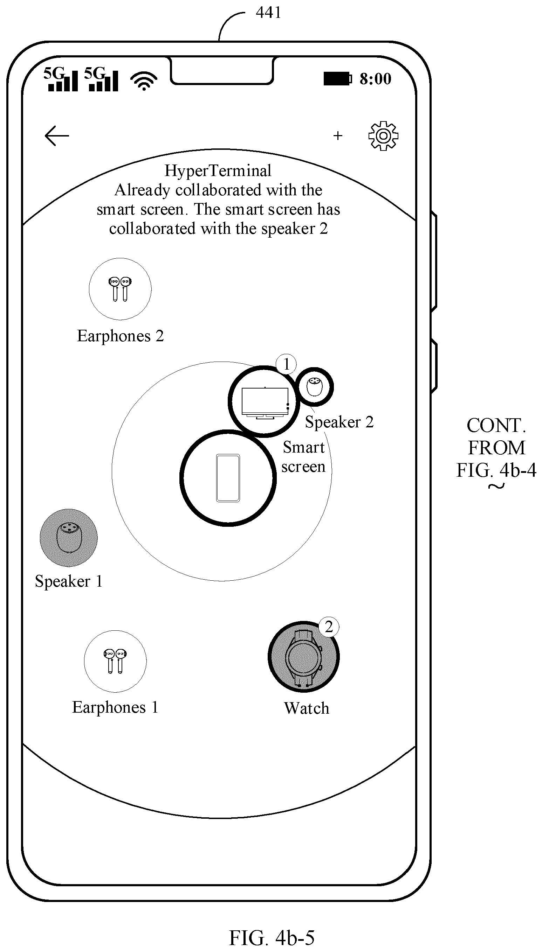

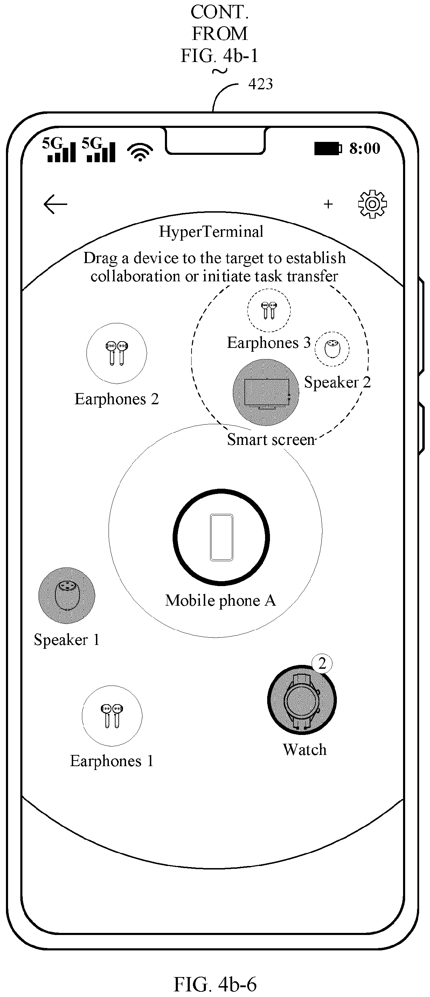

In addition, based on descriptions of the foregoing content, in embodiments of this application, a form of displaying the distributed networking structure on the mobile phone A is not limited. For example, FIG. 4b-1 to FIG. 4b-6 are another interface diagram in which a distributed networking structure is displayed according to an embodiment of this application. Different from the interface 42 in FIG. 4a-2, an interface 421 in FIG. 4b-6 may display a terminal device connected to the mobile phone A. A terminal device further connected to the connected terminal device may be displayed in a collapsed manner. For example, with reference to the networking structure described on the interface 42, there are terminal devices further connected to the smart screen and the watch. The terminal devices further connected to the smart screen and the watch may not be displayed in an expanded manner on the interface 421, and an indicator 405 may be displayed on icons of the smart screen and the watch. The indicator 405 may indicate, to the user, a quantity of other terminal devices connected to the terminal device, to indicate, to the user, that there are terminal devices further connected to the smart screen and the watch. The indicator 405 may include, for example, but is not limited to, a number indicator or a small icon (for example, the indicator 405 of the smart screen may be small icons of the earphones 3 and the speaker 2, and the small icon is only used as a prompt and cannot be dragged). In addition, during specific implementation, a form of indicating a further connected terminal device is not limited to the indicator 405 on the interface 421, and may alternatively be a text prompt or an icon display effect (for example, if there is a further connected terminal device, an icon contour may be displayed in bold, or an icon is filled with a different color).

On the interface 421, if the mobile phone A detects an operation on the icon of the smart screen (for example, a double-tap operation, a touch and hold operation, or a voice instruction), the mobile phone A may switch to display an interface 422 or an interface 423.

On the interface 422, the icon of the smart screen may be displayed in a middle location, and icons of terminal devices connected to the smart screen (for example, the earphones 3, the speaker 2, and the mobile phone A) are displayed in peripheral locations. The mobile phone A as a central device at an upper level of the smart screen (namely, a super central device in a current networking structure) may be distinguished from peripheral devices (the earphones 3 and the speaker 2) of the smart screen as a central device, so that the user can return to display of an upper-level network structure. It may be understood that another terminal device connected to the mobile phone A may not be displayed on the interface 422. For example, an identifier 5 may be used to indicate the user that there are four terminal devices further connected to the mobile phone A. Alternatively, although not shown in FIG. 4b-1 to FIG. 4b-6, in another display manner, on the interface 422, an icon of the mobile phone A may not be displayed, only an icon of the smart screen is displayed in a middle location, and identifiers of a plurality of terminal devices connected to the smart screen are displayed.

On the interface 423, the terminal device connected to the smart screen may be in an expanded manner based on the interface 421, and the mobile phone A is still displayed in the middle location of the interface 423. In this scenario, the mobile phone A may display more terminal devices in an expanded manner in response to a user operation based on a user requirement.

In addition, optionally, in addition to the central device (the mobile phone A) shown in FIG. 4a-1 to FIG. 4a-4 or FIG. 4b-1 to FIG. 4b-6, if another terminal device (for example, the smart screen, the earphones 2, the speaker 1, or the watch) included in FIG. 4a-1 to FIG. 4a-4 or FIG. 4b-1 to FIG. 4b-6 has a peripheral device, a display interface of multi-device networking with the another terminal device as a central device may be displayed on the another terminal device. For example, if the another terminal device is the smart screen shown in FIG. 4a-1 to FIG. 4a-4 or FIG. 4b-1 to FIG. 4b-6, a networking radar chart with the smart screen as a central device and with the speaker 2 and the earphones 3 as peripheral devices of the smart screen may be displayed on the smart screen. For another example, if the another terminal device is the watch shown in FIG. 4a-1 to FIG. 4a-4 or FIG. 4b-1 to FIG. 4b-6, a networking radar chart with the watch as a central device and with the treadmill and the skipping rope as peripheral devices of the watch may be displayed on the watch.

Alternatively, further optionally, a complete multi-device networking radar chart with the mobile phone as a central device may be displayed on another terminal device except the mobile phone. Alternatively, in another optional scenario, on another terminal device (for example, the smart screen, the earphones 2, the speaker 1, or the watch) included in FIG. 4a-1 to FIG. 4a-4, switching of the central device may be further implemented by using a displayed networking radar chart. For example, a complete multi-device networking radar chart in which the mobile phone A is used as a central device (for example, displayed as the interface 421 or the interface 42) may be displayed on the smart screen. The smart screen may receive an operation performed by the user to switch a central device, to switch a networking structure in which the mobile phone A is used as a central device (for example, the interface 422) to a networking structure in which the smart screen is used as a central device. It may be understood that, during implementation of this application, an implementation of displaying a networking topology structure on a peripheral device is not limited.

It should be noted that, optionally, in the radar chart shown on the interface 42, the terminal device may further receive a user operation performed by the user on a peripheral device (for example, a double-tap operation or a touch and hold operation), and collapse a peripheral device of the peripheral device or expand a peripheral device of the peripheral device in response to the user operation. For example, the user may collapse the speaker 2 and the earphones 3 by performing a double-tap operation on the smart screen on the interface 42; and the user may further expand the collapsed speaker 2 and the collapsed earphones 3 by performing a double-tap operation on the smart screen on the interface 42 again. A scenario of expanding the peripheral device of the peripheral device and a scenario of collapsing the peripheral device of the peripheral device may be distinguished by using different display states. This is not limited in this application. It may be understood that, based on a service scenario requirement, a networking topology structure of a central device may also be collapsed or expanded. For example, it is assumed that a complete networking topology structure is displayed on a peripheral device, other peripheral devices of a central device may be collapsed, and only a networking topology structure diagram related to a current peripheral device is retained. In this way, a radar chart that is more suitable for a user habit may be provided for the user, so that the user conveniently performs a device interaction process of multi-device networking.

In addition, in the foregoing example, the mobile phone A is directly used as a central device for description. It should be noted that, in embodiments of this application, the central device may be set according to an actual scenario. Optionally, the central device may be determined by a plurality of terminal devices through negotiation. Further optionally, the central device may be determined by a control device in a plurality of terminal devices. Alternatively, the central device may be further determined in response to an operation or a selection of the user. A specific implementation is described in detail in a subsequent embodiment, and details are not described herein.

**Step 3: Device interaction process based on multi-device networking.** During implementation of this application, because different terminal devices may be in different device states, there may be different processing scenarios, for example, including but not limited to the following scenarios.

Scenario 1: Based on devices discovered on the interface 42, the terminal device may receive a user operation (for example, a drag operation) used to perform collaboration between the devices, or may receive a user operation used to perform task transfer between the devices. For example, prompt information "Drag a device to the target to establish collaboration or initiate task transfer" may be displayed on the interface 42, to prompt the user to perform device collaboration or task transfer on the interface 42 based on a user operation. In the following embodiments, a device collaboration scenario is mainly used to describe a multi-device networking manner provided in embodiments of this application.

For example, the user may drag the speaker 2 to the smart screen on the interface 42, to implement collaboration between the speaker 2 and the smart screen, as shown on an interface 43. In this case, icons of the smart screen and the speaker 2 are attached together, indicating that the smart screen and the speaker 2 have collaborated. Then, the user may further drag the smart screen to the mobile phone A on the interface 43, to implement collaboration between the mobile phone A and the smart screen, as shown on an interface 44. In this case, icons of the mobile phone A and the smart screen are attached together, indicating that the mobile phone A and the smart screen have collaborated, and the icons of the smart screen and the speaker 2 are attached together, indicating that the smart screen and the speaker 2 have collaborated. It may be understood that, as the smart screen and the speaker 2 have collaborated, the smart screen further collaborates with the mobile phone A. For example, a scenario in which video data on the mobile phone A is projected to the smart screen and audio data is further played by the speaker 2 in a distributed manner may be implemented. Therefore, it can be learned that, based on the method provided in embodiments of this application, collaboration between a plurality of levels of devices can be conveniently implemented, and an operation is simple.

Alternatively, for another example, based on a display manner of the current networking structure in FIG. 4b-1 to FIG. 4b-6, the user may drag the speaker 2 to the smart screen on the interface 422, to implement collaboration between the speaker 2 and the smart screen, as shown on an interface 431. In this case, icons of the smart screen and the speaker 2 are attached together, indicating that the smart screen and the speaker 2 have collaborated. Then, the mobile phone A may first detect, on the interface 431, a user operation performed on the icon of the mobile phone A (for example, a double-tap operation, a touch and hold operation, or a voice instruction), and may display an interface 432 in response to the user operation. Alternatively, on a control interface on which an identifier of the mobile phone A is not displayed, if the mobile phone A may further detect a user operation, a gesture operation, a voice instruction, or the like that is performed on a control 406 for returning to a previous interface, and may display the interface 432 in response to the user operation, the gesture operation, the voice instruction, or the like. In this case, the interface 432 is switched back to display an interface on which the mobile phone Ais displayed in the middle location and the terminal device connected to the mobile phone A is displayed in a peripheral location. It may be understood that the smart screen and the speaker 2 have collaborated on the interface 432. Then, on the interface 432, the user may continue to drag the smart screen to the mobile phone A, to implement collaboration between the mobile phone A and the smart screen, as shown on the interface 441. In this case, icons of the mobile phone A and the smart screen are attached together, indicating that the mobile phone A and the smart screen have collaborated, and icons of the smart screen and the speaker 2 are attached together, indicating that the smart screen and the speaker 2 have collaborated. It may be understood that, on the interface 432 or the interface 441, the indicator 405 may be used to indicate the user that there is another terminal device connected to the smart screen.

For another example, in embodiments of this application, collaboration between the smart screen and the speaker 2 may continue to be implemented in a scenario in which the mobile phone and the smart screen have collaborated. A sequence of sequential collaboration between a plurality of terminal devices is not limited in this application.

Terminal devices having collaborated indicate that a plurality of terminal devices may jointly process one task, that is, in this case, the plurality of terminal devices have a capability of collaboratively processing the task. Task collaboration may indicate that a plurality of terminal devices may perform collaborative processing on one to-be-processed task.

For example, a task collaboration scenario may include but is not limited to a mirror projection scenario, an application projection scenario, and a productivity desktop mode. In the mirror projection scenario, for example, a desktop display interface of the mobile phone may be projected to the smart screen for mirror display. In the application projection scenario, for example, a piece of video data of a video application included in the mobile phone may be projected to the smart screen for display. In the productivity desktop mode, for example, a desktop of the mobile phone may be projected to the smart screen for adaptive matching. In addition, a manner in which a terminal device performs collaboration may include but is not limited to: performing collaboration based on a task that is currently being processed by the terminal device (for example, one or a combination of a foreground service and a background service), where for example, the mobile phone may project a video that is being played on the smart screen for playing; performing collaboration based on a device type, where for example, if the smart screen determines that a collaborative device is a device with an audio playing capability, the smart screen may project audio data to a speaker for playing; performing collaboration based on a user operation, where for example, the user operates the mobile phone to project screen mirror data of the mobile phone to the smart screen for display; and so on.

For example, in a scenario in which the smart screen and the speaker 2 shown on the interface 43 in FIG. 4a-3 have collaborated, if the user is playing a video or starts to play a video on the smart screen, the smart screen may project audio data of the video to the speaker 2 for playing.

For another example, in a scenario in which, on the interface 44 in FIG. 4a-4, the mobile phone A and the smart screen have collaborated and the smart screen and the speaker 2 have also collaborated, if the user performs, on the mobile phone A, a user operation of starting playing a video and projecting the video to the smart screen, the mobile phone A may project data of the to-be-played video to the smart screen for video display, and the smart screen may further project audio data of the to-be-played video to the speaker 2 for audio playing. It can be learned from the two examples that the smart screen projecting the audio data to the speaker 2 for playing may be implemented based on a playing task generated by the smart screen in a scenario in which the smart screen collaborates with the speaker 2; or may be implemented based on task information sent by the mobile phone in a scenario in which the mobile phone collaborates with the smart screen and the smart screen collaborates with the speaker 2. This is not limited in this application.

It may be understood that, during implementation of this application, in the radar chart displayed by the mobile phone, not only collaboration between a peripheral device and a central device (the mobile phone) can be implemented, but also collaboration between a peripheral device (for example, a second-level peripheral device, namely, the speaker 2) and a peripheral device (for example, a first-level peripheral device, namely, the smart screen) can be implemented. Therefore, the user can conveniently implement collaboration between a plurality of terminal devices by using a mobile phone with a touch capability.

In addition, it may be further understood that, the user may also perform collaborative disconnection on a collaborated terminal device in the radar chart displayed by the mobile phone. For example, the icon of the speaker 2 is dragged away from the icon of the smart screen on the interface 43, so that the icon of the speaker 2 and the icon of the smart screen are no longer attached together, to implement collaborative disconnection between the speaker 2 and the smart screen. Other collaboration scenarios and specific implementation processes are not described again. For details, refer to the content described in the foregoing embodiments.

Scenario 2: As shown in FIG. 5A to FIG. 5D, it is assumed that the mobile phone B exists, the speaker 1, the smart screen, and peripheral devices (the earphones 3 and the speaker 2) of the smart screen may also be discovered through device scanning on the mobile phone B, and the mobile phone B may further discover the speaker 3. It may be understood that a networking structure shown in FIG. 5A to FIG. 5D is a second network structure in which the mobile phone B is used as a super central device. With reference to the content shown in FIG. 4a-1 to FIG. 5D, it can be learned that one terminal device may be discovered by and connected to different terminal devices in a device scanning process. For example, the smart screen may not only be discovered by the mobile phone A and establish a connection to the mobile phone A, but also be discovered by the mobile phone B and establish a connection to the mobile phone B.

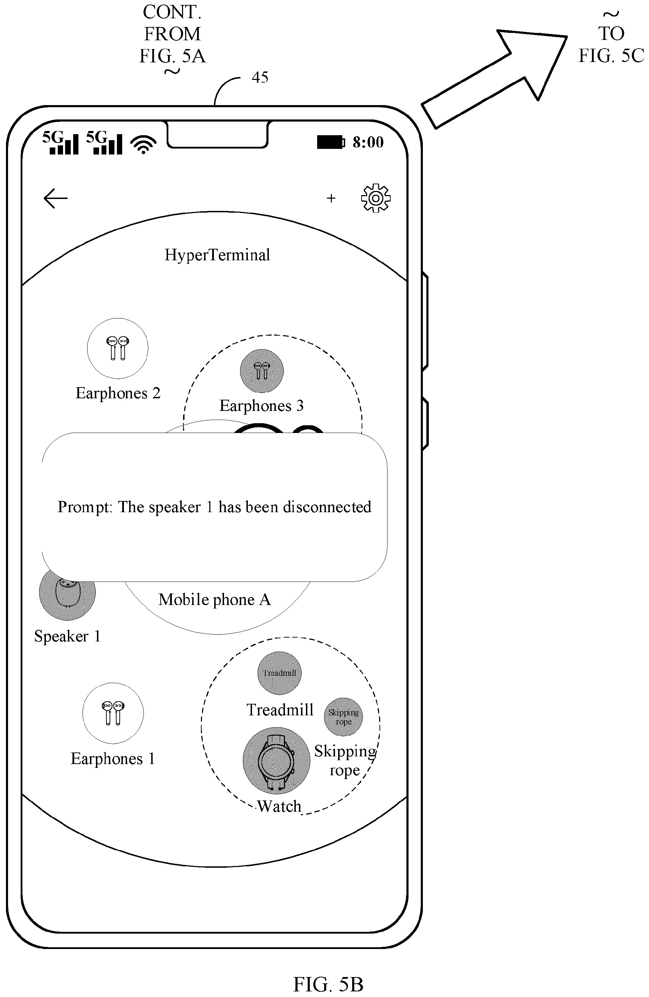

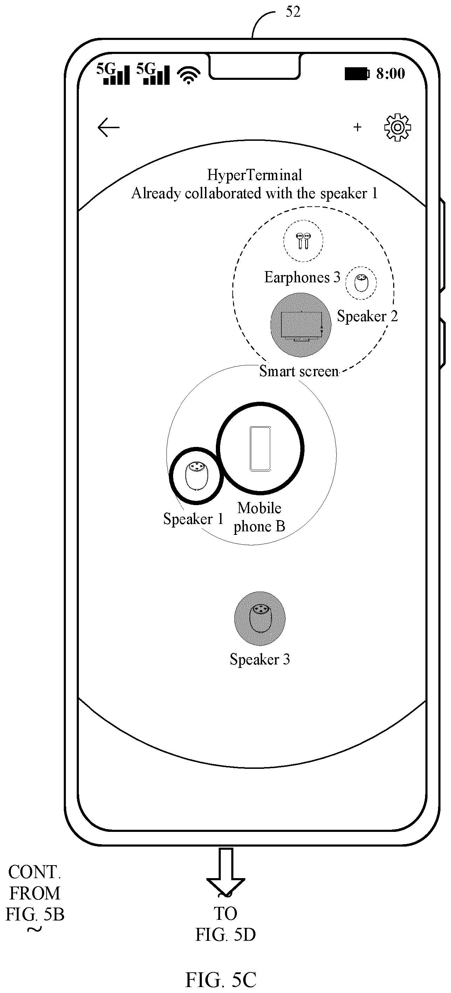

For example, if the user performs, on an interface 51 in FIG. 5A, a user operation of dragging the speaker 1 to the mobile phone B, collaboration between the speaker 1 and the mobile phone B may also be implemented, as shown on an interface 52 in FIG. 5C. Although the speaker 1 is connected to the mobile phone A, the speaker 1 is not in a collaborative state. Therefore, the speaker 1 may be considered to be in a preemptable state. In this case, the mobile phone B may preempt the speaker 1. After detecting a user operation performed by the user on the interface 51, the mobile phone B may notify the mobile phone A, so that the mobile phone A displays a prompt pop-up window "Prompt: The speaker 1 has been disconnected" shown in FIG. 5B, so as to notify, in time, a status of the speaker 1 to the user using the mobile phone A.

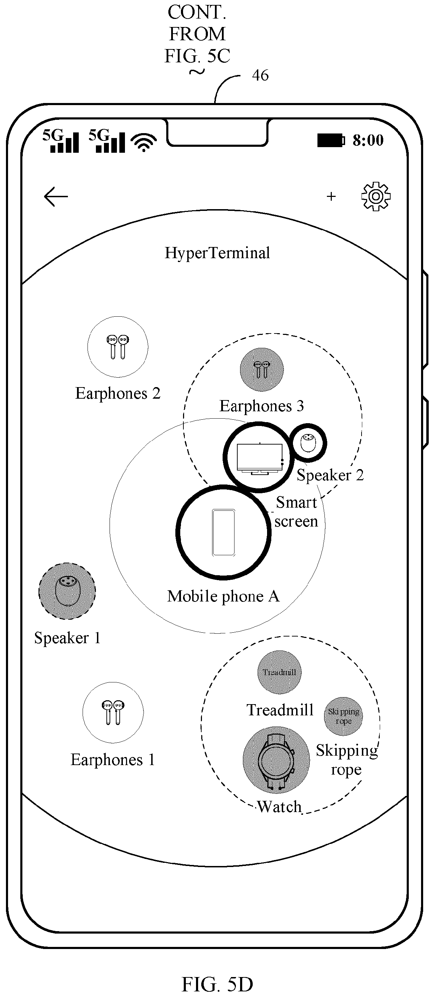

In addition, in this scenario, after receiving the notification from the mobile phone B, the mobile phone A may further set the speaker 1 to be displayed in a preset effect. As shown on an interface 46 in FIG. 5D, the speaker 1 may be displayed in a blurring effect, to indicate that the speaker 1 is preempted by another terminal device. In this case, the speaker 1 is in a collaboration-unachievable state in a networking structure managed by the mobile phone A. It may be understood that, during actual implementation, another preset effect may be set for display, for example, a gray background, or an identifier of the speaker 1 is no longer displayed on the mobile phone A. This is not limited in this application. Optionally, in response to a drag operation on an icon of the speaker 1 that is in the blurring effect, the mobile phone A may further display prompt information such as a prompt pop-up window to the user, to remind the user that the speaker 1 is in a collaboration-unachievable state in this case and cannot perform collaboration in the networking structure to which the mobile phone A belongs.

Scenario 3: As shown on an interface 53 in FIG. 6A, if the mobile phone B detects a user operation of dragging the speaker 2 to the smart screen by the user, because the speaker 2 and the smart screen are collaborating with the mobile phone A, that is, it may be considered that the speaker 2 and the smart screen are in a non-preemptable state, the mobile phone B cannot implement collaboration between the speaker 2 and the smart screen. In this case, a prompt dialog box shown on an interface 54 may be displayed: "Alarm: Connection failed, the smart screen is being occupied!", to remind, in time, the user using the mobile phone B that the current collaboration fails.

It may be understood that, with reference to the content described in the scenario 2, on the mobile phone A, if the speaker 2 and the smart screen have collaborated, after the mobile phone B receives a notification from the mobile phone A, the smart screen, or the speaker 2, the mobile phone B may also update display effects of an identifier of the speaker 2 and an identifier of the smart screen that are included in a networking structure displayed on the mobile phone B, for example, the effect is displayed as a gray background a blurring effect, or the identifier of the smart screen is no longer displayed. The notification may be an indication message, where the indication message indicates a change of a device status; or may be a database synchronization message, where the database synchronization message may be a database synchronization message sent by a terminal device (for example, the smart screen) to a related terminal device (for example, the mobile phone A or the mobile phone B) after the terminal device updates distributed data based on a change of a device status.

Scenario 4: Although not shown in FIG. 6A and FIG. 6B, if the mobile phone B detects a user operation of dragging the speaker 3 to the mobile phone by the user, assuming that the speaker 3 is connected to only the mobile phone B (which may also be understood as that the speaker is in an idle state, that is, the speaker is not connected to another central device and is not in a collaborative state), the mobile phone B can implement collaboration between the speaker 3 and the mobile phone B in response to the user operation.

It may be understood that, with reference to the content described in the foregoing plurality of scenarios, in an interaction process of multi-device networking, peripheral devices (including a first-level peripheral device, a second-level peripheral device, ...) may have, but not limited to, the following states: an idle state (for example, the speaker 3 in FIG. 6A), a connected but preemptable state (for example, the speaker 1 in FIG. 5C), and a non-preemptable state (for example, the speaker 2 in FIG. 6B). For a peripheral device in an idle state, device collaboration may be generally successfully implemented. For a peripheral device in a connected but preemptable state, device collaboration may also be generally successfully implemented, and a connected related terminal device may be notified in time, to display prompt information, on the mobile phone A, shown on an interface 45. For a peripheral device in a non-preemptable state, a terminal device cannot perform collaboration with the peripheral device, and in this case, the terminal device may display alarm information on the interface 54 to the user.

With reference to the foregoing scenarios and examples, the method provided in embodiments of this application may be applied to more application scenarios, to meet user requirements for more intelligent scenarios. In addition, in a scenario in which the central device is a terminal device with a touch capability, user requirements for more convenient device interaction can be met, and device interaction between peripheral devices can be implemented based on the central device, so that multi-device interaction and control can be better implemented based on a good control capability of the central device. This improves user experience.

It may be understood that the foregoing scenarios may be also combined with each other, and this application is not limited to the foregoing scenarios.

The foregoing describes, with reference to a plurality of scenarios, an interface processing effect that can be achieved by using the method provided in embodiments of this application. The following describes an implementation process of a multi-device networking method provided in this application, to describe how to use the method provided in this application to achieve the interface processing effects shown in FIG. 4a-1 to FIG. 6B, so that the method is applicable to collaboration between more terminal devices in more scenarios. FIG. 7 is a schematic flowchart of a multi-device networking method according to a possible embodiment of this application. The method may be applied to a terminal device (for example, a mobile phone, a tablet computer, or a PC), and may include the following procedure.

Step 701: A user triggers "HyperTerminal" on a first terminal device.

The first terminal device may include at least several functional units that are the focus of embodiments of this application: "HyperTerminal", a distributed database, a DEF, and a soft bus. It should be noted that the functional units mean merely logical function division. During specific implementation, any implementation may be used, for example, the functional units are integrated into one module or disposed independently. This is not limited in this application. "HyperTerminal" (or referred to as "Hiplay") is mainly responsible for providing an interaction interface for the user on a display panel, and may be used as an entry for triggering a multi-device networking service. The distributed database is mainly responsible for creation, updating, synchronization, and the like of distributed data between a plurality of devices, to obtain related information such as device information, a device capability, a networking connection status, and an online/offline status of each device in time. The DEF is mainly responsible for scheduling a distributed task, and receiving, sending, and processing cross-terminal-device instructions. The soft bus is used to discover a device and establish a data channel.

For example, that the user triggers "HyperTerminal" on the first terminal device may be implemented as an implementation on the interface 41 in FIG. 4a-1, and a multi-device networking procedure may be entered by using a "HyperTerminal" service card included in a notification bar page of the first terminal device.

Step 702: The first terminal device starts device scanning. For example, the first terminal device may discover a nearby terminal device through the soft bus in a manner like Bluetooth or Wi-Fi.

Step 703: The first terminal device discovers a second terminal device. For example, the first terminal device discovers a terminal device (for example, the second terminal device) after scanning through the soft bus. It should be noted that an example in which the first terminal device discovers the second terminal device is used. For a processing procedure in which the first terminal device discovers another terminal device, refer to a processing procedure for the second terminal device. Details are not described herein again in this application. **In** addition, after discovering the second terminal device, the first terminal device may establish a communication link to the second terminal device, for example, a Bluetooth link or a Wi-Fi link. For example, if discovering the second terminal device through Bluetooth, the first terminal device may establish a Bluetooth link to the second terminal device.

Step 704: The first terminal device creates a distributed database. For example, the first terminal device creates the distributed database based on the discovered second terminal device and device information of the second terminal device. It may be understood that, if the first terminal device has created a distributed database, the device information of the second terminal device may be directly updated to the created distributed data.

In this embodiment of this application, the created distributed database may be used to store a networking connection relationship (which may also be understood as a "structural relationship" in a networking structure) between a plurality of terminal devices, for example, information such as a discovery result of the terminal devices and a networking connection status, so that a corresponding "HyperTerminal" interface can be displayed based on the created distributed database, to support multi-device networking. It may be understood that a distributed networking structure included on the "HyperTerminal" interface may be obtained based on the structural relationship between the plurality of terminal devices that is stored in the distributed database.

Step 705: The first terminal device delivers a cross-terminal-device discovery instruction. "HyperTerminal" may send the cross-terminal-device discovery instruction to the second terminal device through the DEF. The cross-terminal-device discovery instruction instructs the second terminal device to perform device discovery, to obtain distributed networking more quickly and more efficiently, without a need for the user to perform device scanning on the second terminal device before starting scanning of the second terminal device. This can reduce scanning time. Alternatively, the cross-terminal-device discovery instruction may be a synchronization request message. The synchronization request message may be used to request the second terminal device to synchronize a distributed database.

Step 706: The second terminal device triggers "HyperTerminal". For example, after receiving the cross-terminal-device discovery instruction from the first terminal device, the second terminal device triggers to enter "HyperTerminal" in response to the cross-terminal-device discovery instruction.

Similar to the first terminal device, the second terminal device may also include at least several functional units that are the focus of embodiments of this application: "HyperTerminal", a distributed database, a DEF, and a soft bus. Main functions of the functional units are not described herein again.

Step 707: The second terminal device starts device scanning. For example, the second terminal device may also discover a nearby terminal device through the soft bus in a manner like Bluetooth or Wi-Fi.

Step 708: The second terminal device performs device discovery. For example, the second terminal device may also discover another terminal device based on device scanning (it is assumed that the another terminal device is a third terminal device). Optionally, if the second terminal device may also discover the third terminal device, in a scenario in which the first terminal device is used as a central device in multi-device networking, the second terminal device may be used as a first-level peripheral device of the first terminal device, and the third terminal device may be further used as a second-level peripheral device of the first terminal device. It may be understood that, although not shown in FIG. 7, the second terminal device may also deliver a cross-terminal-device discovery instruction to the third terminal device. For a processing process of the third terminal device, refer to the second terminal device. Details are not described herein again. In addition, during device scanning and device discovery, a plurality of devices may be discovered sequentially until no next-level peripheral device is discovered. In this way, larger distributed networking can be constructed.

Further optionally, in a scenario in which the second terminal device is used as a central device in multi-device networking, the first terminal device may be used as a peripheral device of the second terminal device, and the third terminal device may be used as another peripheral device of the second terminal device.

Step 709: The second terminal device updates the distributed database. For example, similar to a processing procedure of the first terminal device, after performing device discovery, the second terminal device may also update a created distributed database; or if the second terminal device does not have a created distributed database, the second terminal device may create a distributed database.

Optionally, when updating the distributed databases, the first terminal device and the second terminal device may perform update in an incremental update manner, for example, incremental addition, incremental deletion, or incremental change. In this way, update efficiency can be improved due to a small volume of changed data, and synchronization performance is high because update of the distributed database can be triggered in response to a device discovery result of the terminal device.

Step 710: The second terminal device synchronizes distributed data with the first terminal device. For example, the second terminal device may send a database synchronization message to the first terminal device. The distributed data is synchronized, so that the first terminal device may learn of a networking connection status, an online/offline notification, and the like of each terminal device in the distributed networking in time, to implement multi-device networking more accurately. For example, in a scenario in which the second terminal device discovers the third terminal device, the updated distributed data may be synchronized to the first terminal device in time, so that the first terminal device learns of networking connection information of the second terminal device. In this way, the first terminal device may not only establish a connection to the second terminal device, but also obtain, by synchronizing data of the distributed database, information about a networking connection status of the second terminal device (for example, a peripheral device connected to the second terminal device), so that distributed networking including more terminal devices can be created. It should be noted that the second terminal device may send the database synchronization message to the first terminal device after each update of the distributed database or periodically, so that the first terminal device can synchronously update the distributed database in time.

Step 711: Display a first interface based on the synchronized distributed data. For example, if the second terminal device discovers the third terminal device, the first terminal device may update a radar chart based on the distributed data synchronized by the second terminal device, that is, may also display the third terminal device in the radar chart. Optionally, if the first terminal device is a central device, the third terminal device is displayed as a peripheral device of the second terminal device (namely, the second-level peripheral device of the first terminal device) in the radar chart of the first terminal device. Further optionally, if the second terminal device is a central device, the third terminal device and the first terminal device are both displayed as two peripheral devices of the second terminal device in a radar chart of the first terminal device. It may be understood that the first terminal device may obtain, by using the second terminal device, an identifier of a terminal device connected to the second terminal device, for example, an identifier of the third terminal device.

Step 712: The first terminal device detects a first operation on the first interface. For example, with reference to the content described in FIG. 4a-1 to FIG. 4a-4, in an example in which the first terminal device is the mobile phone A, the second terminal device is the smart screen, and the third terminal device is the speaker 2, the mobile phone A may detect the first operation of dragging the speaker 2 to the smart screen by the user.

Step 713: The first terminal device sends a first indication message to the second terminal device. For example, after detecting the first operation, in response to the first operation, the mobile phone may indicate the smart screen to collaborate with the speaker 2.

For example, the mobile phone A may further determine, based on data in a distributed database, whether the smart screen can successfully collaborate with the speaker 2. Optionally, if the speaker 2 is in an idle state, the smart screen can successfully collaborate with the speaker 2. **In** this case, the first indication message may indicate the smart screen and the speaker 2 to perform collaborative processing. **In** this scenario, when sending the first indication message to the smart screen, the mobile phone A may further include a manner of collaboration in the first indication message. Optionally, the mobile phone A may determine a manner of collaboration between the smart screen and the speaker 2 based on information such as a user operation, a device type, or a device running status. The manner of collaboration may include but is not limited to any one of the following manners: screen mirroring, application projection, audio projection, and task relay. For example, the mobile phone A may display a pop-up window to the user on the first interface. The pop-up window may indicate the user to select the manner of collaboration between the smart screen and the speaker 2. For example, the user may choose to project device audio data of the smart screen onto the speaker 2 for playing, or may choose to project currently played application audio data onto the speaker 2 for playing. For another example, as the speaker 2 is of a device type with an audio playing capability, the mobile phone A may further indicate the smart screen to project audio data onto the speaker 2 for playing. For another example, as a video in a video app is currently being played on the smart screen, the mobile phone A may further indicate to project audio data of the video onto the speaker 2 for playing.

For another example, the mobile phone A may alternatively directly send the first indication message to the smart screen. **In** this case, the first indication message indicates, to the smart screen, that the user requests the smart screen to collaborate with the speaker 2. **In** this example, the smart screen may determine, based on data stored in the distributed database, whether the smart screen can collaborate with the speaker 2. Optionally, if the smart screen determines that the smart screen can collaborate with the speaker 2, the smart screen may return a collaboration success indication message to the mobile phone A. Further optionally, if the smart screen determines that the smart screen cannot collaborate with the speaker 2, the smart screen may return a collaboration failure indication message to the mobile phone A. In this way, the mobile phone A may update, based on the collaboration success indication message, display of the control interface to indicate that an icon of the smart screen and an icon of the speaker 2 have collaborated; or the mobile phone A may display, on the control interface based on the collaboration failure indication message, a prompt message indicating that the smart screen fails to collaborate with the speaker 2, or the like.

In addition, it may be understood that the mobile phone A determines, based on the data in the distributed database, that the smart screen fails to collaborate with the speaker 2. In this case, the mobile phone A may directly display a second interface. For example, if the speaker 2 is in a non-preemptable state, the mobile phone A determines that the smart screen fails to collaborate with the speaker 2. In this case, the mobile phone A may directly display the second interface to the user. The second interface indicates, to the user, that the smart screen fails to collaborate with the speaker 2. It may be understood that, in this scenario, the smart screen may be unaware of a collaboration failure.

Step 714: The second terminal device performs collaborative processing. For example, if the first indication message indicates the smart screen and the speaker 2 to perform collaborative processing when the mobile phone A determines that the smart screen successfully collaborates with the speaker 2, the smart screen may project, based on the first indication message, audio data onto the speaker 2 for audio playing. For another example, if the first indication message indicates the smart screen to determine whether the smart screen can collaborate with the speaker 2, in a scenario in which the smart screen determines that the smart screen can collaborate with the speaker 2, the smart screen may project audio data onto the speaker 2 for audio playing. The connection between the smart screen and the speaker 2 indicates that a communication link is established between the smart screen and the speaker 2. When the smart screen determines that the smart screen is in collaboration with the speaker 2, the smart screen may start to transmit service data via the communication link established between the smart screen and the speaker 2. Collaboration between the smart screen and the speaker 2 indicates that if service data that can be processed by the speaker 2 exists, the smart screen may send the service data to the speaker 2. For example, if the smart screen is playing a video, audio data of the video may be sent to the speaker 2, so that the speaker 2 plays the audio data. It may be understood that, if the user performs only a user operation for browsing an interface on the smart screen, the smart screen has no service data sent to the speaker 2; and when the smart screen has audio data, the smart screen sends the audio data to the speaker 2 for playing.

Step 715: The second terminal device updates the distributed database. For example, the smart screen may update, to the distributed data, a networking connection status during collaboration between the smart screen and the speaker 2.

Step 716: The second terminal device synchronizes the distributed data with the first terminal device. For example, the smart screen may synchronize an updated distributed database to a connected terminal device in a timely manner (for example, may synchronize the updated distributed database to the first terminal device), to notify a change of a networking connection status between terminal devices in distributed networking to a super central device in the networking in a timely manner, so that the super central device can learn of a latest networking structure in a timely manner, to avoid a service conflict.

It may be understood that, in the distributed networking, after a networking connection status of any terminal device in the networking changes, the distributed database may be updated, and an updated distributed database is synchronized to a connected terminal device in the networking. Optionally, a peripheral device in the networking may send synchronization information to the central device, and the central device updates the distributed data.

Step 717: The first terminal device displays a second interface based on the synchronized distributed data. For example, the second interface is different from the first interface as follows: on the first interface, the smart screen and the speaker 2 are in a connected and non-collaborative state; and in the second interface, the smart screen and the speaker 2 have collaborated. The first interface is shown as the interface 42 in FIG. 4a-2, and the second interface is shown as the interface 43 in FIG. 4a-3.

It may be understood that the first terminal device may further receive another user operation of the user. For a process of responding to the another user operation, refer to the processing procedure described in step 712 to step 717. Details are not described herein again. The first terminal device may be, for example, a mobile phone, a tablet computer, or a notebook computer. The second terminal device may be a terminal device with a display function, for example, may be a smart television. The third terminal device may be a terminal device with an audio playing function, for example, a speaker or earphones. Alternatively, the second terminal device may be a terminal device with an auxiliary control function, for example, a watch. The third terminal device may be a terminal device with a specific function, for example, may be a skipping rope or a treadmill.

Based on the processing procedure described above, a network constructed in a multi-device networking procedure is usually multi-level distributed networking that includes one central device, at least one peripheral device of the central device, and at least one peripheral device of the peripheral device. The central device in the networking may also be understood as a super central device, and may obtain an identifier of a peripheral device of another central device that is used as a peripheral device of the central device.

For example, in a topology structure diagram shown as FIG. 8, the mobile phone A is used as a central device, the speaker 1, the earphones 1, and the smart screen are used as first-level peripheral devices, and the earphones 2, the speaker 2, and the watch are used as peripheral devices of the smart screen and are used as second-level peripheral devices of the mobile phone A. The peripheral device is obtained by performing device scanning and device discovery based on a terminal device. For example, a plurality of terminal devices can discover peripheral devices, to obtain a plurality of pieces of distributed networking with central devices, for example, the distributed networking with the smart screen as a central device shown on the interface 42 in FIG. 4a-2, and another distributed networking with the watch as a central device shown on the interface 42. How to determine a central device when the mobile phone A performs device scanning and device discovery is also worth studying.

In an optional example, a plurality of terminal devices may perform negotiation to determine a central device, for example, the mobile phone A, the smart screen, and the watch on the interface 42 may collaboratively determine the mobile phone A as a central device, to obtain the radar chart shown on the interface 42.

Optionally, an optional negotiation rule may include but is not limited to the following principles:
Principle 1: A terminal device with a touch capability is used as a central device. For example, to facilitate touch of the user, a terminal device with a touch control capability may be preferentially selected as a central device. For example, the terminal device with a touch control capability may be a mobile phone, a tablet computer (PAD), an in-vehicle computer, a watch, or the like. For example, terminal devices with a touch capability in the mobile phone A, the smart screen, and the watch shown on the interface 42 are the mobile phone A and the watch. Therefore, during implementation of this application, the mobile phone A and the watch may be preferentially selected as central devices in multi-device networking.

If a plurality of terminal devices that meet a condition may be obtained based on the principle 1, determining may continue to be performed based on the following principles.

Principle 2: A terminal device with a higher priority is used as a central device. For example, different weighting factors or priorities may be preconfigured for different terminal devices, and then a priority corresponding to each terminal device in multi-device networking is determined based on the weighting factors or the priorities.

For example, during implementation of this application, different weighting factors or priorities are allocated to different terminal devices based on different types of terminal devices in different application scenarios (for example, several scenarios shown in the following Table 1). Table 1 is as follows.

**Table 1**

| **Scenarios** | **Related terminal devices** |
|---|---|
| Smart home | Mobile phone, PAD, smart screen, speaker, camera, and door lock |
| Entertainment | Mobile phone, PAD, smart screen, earphones, AI, and speaker |
| Smart office | Mobile phone, PC, PAD, smart screen, and speaker |
| Health | Mobile phone, watch, band, smart screen, and treadmill |
| Smart travel | Mobile phone, PAD, and in-vehicle computer |
| ... | ... |

Based on the five main application scenarios shown in Table 1, different weighting factors or priorities may be allocated to different terminal devices based on quantities of scenarios related to the different terminal devices. Optionally, a possible weighting factor allocation result is: the mobile phone (whose weighting factor is 5) > the PAD (whose weighting factor is 4) = the smart screen (whose weighting factor is 4) > the speaker (whose weighting factor is 3) > the PC (whose weighting factor is 1) = the earphones (whose weighting factor is 1) = the in-vehicle computer (whose weighting factor is 1) = the watch (whose weighting factor is 1)....

Optionally, to ensure data security of the user and improve privacy of using a "HyperTerminal" network, in this embodiment of this application, a weighting factor may be further allocated with reference to privacy of a terminal device. For example, as a personal device, a mobile phone is generally considered to be more private, and therefore a large weighting factor may be allocated to the mobile phone. As a general-purpose device, a smart screen is less privacy than a mobile phone, and therefore a weighting factor smaller than that of the mobile phone may be allocated to the smart screen. In view of this, during implementation of this application, a terminal device with good privacy may be preferentially selected as a central device, to better ensure data security of the user.

It may be understood that, if there is a weighting factor allocated based on a plurality of factors (such as a type and privacy of a terminal device), when a central device is determined, the central device may be selected based on a weighted summation value.

For example, in a multi-device networking scenario, a plurality of terminal devices may determine, through negotiation, a terminal device with a highest priority (or a largest weighted summation value) as a central device. For example, among the mobile phone A, the smart screen, and the watch on the interface 42, the mobile phone A and the watch are preferentially selected as central devices in multi-device networking based on the principle 1, and the mobile phone A with a higher weighting factor may be further selected as a central device in the multi-device networking based on a weighting factor and the principle 2.

Principle 3: A terminal device operated by the user is used as a central device. For example, in a scenario in which some terminal devices have a same weighting factor (or a same priority) in the principle 2, for example, weighting factors of the PAD and the smart screen are both configured as 4, in a multi-device networking scenario in which the PAD and the smart screen exist, a terminal device operated by the user may be further selected as a central device. For example, the user triggers "HyperTerminal" on the PAD, and obtains the smart screen through device scanning and device discovery. In this case, the PAD that is being operated by the user may be selected from the PAD and the smart screen as a central device, so that the user performs a dragging operation based on multi-device networking in which the PAD is used as a central device.

In another optional example, during implementation of this application, a terminal device, a specified type of terminal device, or a specified rule of terminal device may be further specified as a control device (which may also be referred to as a "super center") in multi-device networking. Then, the terminal device as a "super center" may specify a central device, determine a central device based on a preset rule, or the like.

For example, it is assumed that a PC is used as a "super center". If the PC exists in a multi-device networking scenario, the PC may determine a central device based on all terminal devices discovered in the multi-device networking scenario and a terminal device that triggers device scanning. For example, it is assumed that a mobile phone triggers device scanning and device discovery to obtain a PC, a PAD, and a smart screen. In this case, in a distributed networking scenario including the mobile phone, the PC, the PAD, and the smart screen, the PC may determine which terminal device is used as a central device. Optionally, the PC may alternatively determine a central device based on the principle 1 to the principle 3 described in the foregoing example. Further optionally, the PC may further specify a central device based on a networking connection status of each terminal device. For example, if the PC determines, based on a distributed database, that the mobile phone has a large quantity of peripheral devices, the mobile phone may be preferentially specified as a central device. For another example, the PC may alternatively determine a central device based on another preset rule. This is not limited in this application.

Compared with a multi-device negotiation manner, a manner of arranging "super center" in multi-device networking can reduce a data amount exchanged between devices, and avoid occupation of bandwidth resources. Through a decision of "super center", a central device can be determined, and then the central device is notified. It may be understood that a terminal device with a strong processing capability (for example, a mobile phone, a PC, or a PAD) may be selected as "super center", to further avoid occupying processing performance of a terminal device with a weak processing capability. In addition, an implementation of determining a central device based on "super center" may be more in line with an intention of the user. This improves user experience.

In another possible example, in this embodiment of this application, a selection interface of a central device may also be displayed on a terminal device operated by the user (for example, the mobile phone A). If a selection operation used by the user to select a central device is detected on a selection interface of the mobile phone A, the mobile phone A may also determine, in response to the selection operation, a central device in distributed networking to which the mobile phone A belongs. It may be understood that the mobile phone A may synchronize a determined central device to another terminal device in networking by using a distributed database.

In addition, in a multi-device networking scenario established based on the foregoing content, there is a terminal device that needs to be disconnected. If the terminal device is a peripheral device, the peripheral device may send request information to a central device, and after the central device agrees to disconnect from the terminal device, the terminal device goes offline from multi-device networking (for example, the terminal device is no longer displayed in a radar chart or is displayed as a preset display effect). If the terminal device is a central device, the central device may actively disconnect from a peripheral device. In this case, in a multi-device networking scenario, the central device disconnects from a first-level peripheral device, and the first-level peripheral device may continue to be connected to a second-level peripheral device and peripheral devices at more levels. In this case, the original distributed networking may be divided into one or more pieces of distributed networking in which peripheral devices at different levels are used as central devices.

It may be understood that the smart screen in FIG. 8 may be used as a central device of the earphones 2, the speaker 2, and the watch. For an implementation of determining, from the smart screen, the earphones 2, the speaker 2, and the watch, the smart screen as the central device, refer to the foregoing implementation process of determining the central device. Details are not described herein again.

According to the method provided in this embodiment of this application, distributed networking that includes more terminal devices, includes more comprehensive scenarios, and has a hierarchical feature, and in which more terminal devices are collaboratively associated can be constructed. Based on combination of a UI and a distributed database on a terminal device, multi-device interaction across terminal devices can be implemented. In an aspect, based on update and synchronization of a distributed database, terminal devices can sense an online status or an offline status of another terminal device in time, and learn of a networking connection state (for example, an idle state, a connected but preemptable state, and a non-preemptable state), to support timely display of a user interface and support an interaction operation on the user interface. This can avoid a service interruption due to a service conflict that may exist in the scenario shown in FIG. 1a. In another aspect, based on distributed networking with a hierarchical feature, touch operations between more terminal devices may be further facilitated. For example, collaboration between peripheral devices at different levels may be implemented on a central device with a touch capability (for example, collaboration between the speaker 2 and the smart screen shown on the interface 42 in FIG. 4a-2). Compared with that in an implementation in which collaborative processing needs to be performed on a smart screen by using a remote control in a related technology, touch convenience may be provided, to facilitate intelligent control of terminal devices in distributed networking.

Based on the foregoing embodiments, this application further provides a terminal device. The terminal device includes at least one processor and at least one memory. The at least one memory stores computer program instructions. When the terminal device is run, the at least one processor performs functions performed by the terminal device in the methods described in embodiments of this application. For example, step 701 to step 705, step 710 to step 713, and step 716 and step 717 that are performed by the first terminal device in the embodiment shown in FIG. 7 are performed; or step 705 to step 710 and step 713 to step 716 that are performed by the second terminal device in the embodiment shown in FIG. 7 are performed.

Based on the foregoing embodiments, this application further provides a multi-device networking system. The system includes a plurality of terminal devices in the foregoing embodiments, for example, may include at least the first terminal device and the second terminal device in FIG. 7, and may further include the third terminal device in the foregoing embodiments.

Based on the foregoing embodiments, this application further provides a computer program product. The computer program product includes a computer program (which may also be referred to as code or an instruction). When the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A multi-device networking system, comprising a first terminal device, a second terminal device, and a third terminal device, wherein
the first terminal device is configured to display a first interface, the first interface comprises a plurality of terminal device identifiers, the plurality of terminal device identifiers comprise an identifier of the second terminal device and an identifier of the third terminal device, and the second terminal device and the third terminal device are connected;
the first terminal device is further configured to: detect a first operation on the first interface, and send a first indication message to the second terminal device in response to the first operation, wherein the first indication message indicates the second terminal device to collaborate with the third terminal device; and
the second terminal device is configured to: receive the first indication message, and collaborate with the third terminal device based on the first indication message.

2. The system according to claim 1, wherein the first terminal device is further configured to:
display a second interface when determining that the second terminal device and the third terminal device have collaborated, wherein the second interface indicates that the second terminal device and the third terminal device have collaborated.

3. The system according to claim 1 or 2, wherein the first interface comprises a first networking structure comprising the plurality of terminal device identifiers, the plurality of terminal device identifiers comprise the identifier of the second terminal device and an identifier of a terminal device connected to the second terminal device, and the terminal device connected to the second terminal device comprises the third terminal device.

4. The system according to claim 3, wherein the plurality of terminal device identifiers further comprise an identifier of the first terminal device and an identifier of a terminal device connected to the first terminal device, and the terminal device connected to the first terminal device comprises the second terminal device.

5. The system according to claim 3 or 4, wherein before displaying the first interface,
the first terminal device is further configured to display a third interface, wherein the third interface comprises the identifier of the first terminal device and the identifier of the terminal device connected to the first terminal device, and the terminal device connected to the first terminal device comprises the second terminal device; and
when being configured to display the first interface, the first terminal device is specifically configured to display the first interface when detecting an operation performed on the identifier of the second terminal device.

6. The system according to claim 1, wherein the first terminal device is further configured to:
detect a second operation, wherein the second operation indicates a first combination of collaboration devices to further collaborate with the first terminal device, and the first combination of collaboration devices indicates the second terminal device and the third terminal device that have collaborated; and
display a fourth interface in response to the second operation, wherein the fourth interface indicates that the first terminal device has further collaborated with the first combination of collaboration devices.

7. The system according to claim 6, wherein
the first terminal device is further configured to: if detecting a first instruction for instructing to process a first task, perform, in response to the first instruction, a first subtask of the first task by using the first combination of collaboration devices; and
the second terminal device is further configured to: receive task data of the first subtask, and collaboratively perform the first subtask by using the second terminal device and the third terminal device.

8. The system according to any one of claims 1 to 7, wherein the second terminal device is further configured to: if detecting a first event used to process a second task, perform, in response to the first event, a second subtask of the second task by using the third terminal;
when being configured to detect the first event used to process the second task, the second terminal device is specifically configured to: detect a first user operation on a first display interface of the second terminal device, wherein the first user operation is used to generate the second task; or receive task information from the first terminal device, wherein the task information indicates task data of the second task; and
the second terminal device is a device with a display function, the third terminal device is a device with an audio playing function, the second task is a playing task, and the second subtask is an audio playing task of the playing task; the second terminal device is further configured to: in response to the first event, display display data of the playing task, and send audio data of the playing task to the third terminal device, so that the third terminal device performs an audio playing task on the audio data; and the third terminal device is further configured to: receive the audio data and play the audio data.

9. The system according to any one of claims 1 to 8, wherein before being configured to display the first interface, the first terminal device is further configured to:
obtain, by using the second terminal device, the identifier of the terminal device connected to the second terminal device, wherein the terminal device connected to the second terminal device comprises the third terminal device.

10. The system according to claim 9, wherein
the first terminal device is further configured to: before displaying the first interface, update a distributed database on the first terminal device based on an identifier of a terminal device found through scanning and the identifier that is of the terminal device connected to the second terminal device and that is obtained by using the second terminal device, wherein the distributed database indicates a structural relationship between a plurality of terminal devices; and
when being configured to display the first interface, the first terminal device is specifically configured to display the first interface based on the structural relationship.

11. The system according to claim 10, wherein before updating the distributed database on the first terminal device,
the first terminal device is further configured to: perform device scanning, wherein a device found through scanning comprises the second terminal device; and send a synchronization request message to the second terminal device;
the second terminal device is further configured to: send a first database synchronization message to the first terminal device after receiving the synchronization request message, wherein the first database synchronization message comprises an identifier of a terminal device in a distributed database on the second terminal device, and the distributed database on the second terminal device comprises the identifier of the terminal device connected to the second terminal device;
the first terminal device is further configured to receive the first database synchronization message sent by the second terminal device; and
when being configured to update the distributed database on the first terminal device, the first terminal device is specifically configured to update, to the distributed database on the first terminal device, the identifier of the terminal device connected to the second terminal device in the first database synchronization message, and a relationship of connection between the identifier of the terminal device connected to the second terminal device and the second terminal device.

12. The system according to claim 2, wherein when being configured to display the first interface, the first terminal device is specifically configured to display the first interface based on a distributed database on the first terminal device, wherein the distributed database indicates a structural relationship between a plurality of terminal devices; and
when being configured to display the second interface, the first terminal device is specifically configured to: receive a second database synchronization message sent by the second terminal device, wherein the second database synchronization message indicates that the second terminal device and the third terminal device have collaborated; update the distributed database based on the second database synchronization message; and display the second interface based on an updated distributed database.

13. The system according to any one of claims 1 to 12, wherein the system further comprises a fourth terminal device and a fifth terminal device;
the first terminal device is further configured to display a fifth interface, wherein the fifth interface comprises a plurality of terminal device identifiers, the plurality of terminal device identifiers comprise an identifier of the fourth terminal device and an identifier of the fifth terminal device, and the fourth terminal device and the fifth terminal device are connected;
the first terminal device is further configured to detect a third operation on the fifth interface, wherein the third operation indicates the fourth terminal device to collaborate with the fifth terminal device; and
the first terminal device is further configured to display a sixth interface when determining that collaboration between the fourth terminal device and the fifth terminal device is unachievable, wherein the sixth interface indicates that the fourth terminal device fails to collaborate with the fifth terminal device.

14. The system according to claim 13, wherein when being configured to determine that collaboration between the fourth terminal device and the fifth terminal device is unachievable, the first terminal device is specifically configured to:
determine, based on one or more of a device type of the fourth terminal device, a device status of the fourth terminal device, a device type of the fifth terminal device, or a device status of the fifth terminal device, that collaboration between the fourth terminal device and the fifth terminal device is unachievable.

15. The system according to claim 14, wherein the first terminal device is specifically configured to:
when determining, based on the device status of the fourth terminal device, that the fourth terminal device is in a collaborative state, determine that collaboration between the fourth terminal device and the fifth terminal device is unachievable; or
when determining, based on the device status of the fifth terminal device, that the fifth terminal device is in a collaborative state, determine that collaboration between the fourth terminal device and the fifth terminal device is unachievable.

16. The system according to claim 14 or 15, wherein the identifier that is of the fourth terminal device and that is comprised on the fifth interface is displayed in a preset effect; and/or
the identifier that is of the fifth terminal device and that is comprised on the fifth interface is displayed in a preset effect, wherein
the preset effect indicates that the terminal device is in a collaboration-unachievable state.

17. The system according to any one of claims 14 to 16, wherein when being configured to determine that collaboration between the fourth terminal device and the fifth terminal device is unachievable, the first terminal device is specifically configured to:
send a first indication message to the fourth terminal device in response to the first operation, wherein the first indication message indicates the fourth terminal device to collaborate with the fifth terminal device; and
receive, from the fourth terminal device, information indicating that the fourth terminal device fails to collaborate with the fifth terminal device, and determine, based on the collaboration failure information, that the fourth terminal device fails to collaborate with the fifth terminal device.

18. The system according to any one of claims 1 to 17, wherein the first terminal device is a mobile phone, a tablet computer, or a notebook computer; the second terminal device is a smart television; and the third terminal device is a speaker or earphones.

19. A multi-device networking system, comprising a first terminal device, a second terminal device, and a third terminal device, wherein
the first terminal device is configured to display a first interface, the first interface comprises a plurality of terminal device identifiers, the plurality of terminal device identifiers comprise an identifier of the second terminal device and an identifier of the third terminal device, and the second terminal device and the third terminal device are connected;
the first terminal device is further configured to detect a first operation on the first interface, wherein the first operation indicates the second terminal device to collaborate with the third terminal device; and
the first terminal device is further configured to display a seventh interface when determining that collaboration between the second terminal device and the third terminal device is unachievable, wherein the seventh interface indicates that the second terminal device fails to collaborate with the third terminal device.

20. The system according to claim 19, wherein when being configured to determine that collaboration between the second terminal device and the third terminal device is unachievable, the first terminal device is specifically configured to:
determine, based on one or more of a device type of the second terminal device, a device status of the second terminal device, a device type of the third terminal device, or a device status of the third terminal device, that collaboration between the second terminal device and the third terminal device is unachievable.

21. The system according to claim 20, wherein the first terminal device is specifically configured to:
when determining, based on the device status of the second terminal device, that the second terminal device is in a collaborative state, determine that collaboration between the second terminal device and the third terminal is unachievable; or
when determining, based on the device status of the third terminal device, that the third terminal device is in a collaborative state, determine that collaboration between the second terminal device and the third terminal is unachievable.

22. The system according to any one of claims 19 to 21, wherein the identifier that is of the second terminal device and that is comprised on the first interface is displayed in a preset effect; and/or
the identifier that is of the third terminal device and that is comprised on the first interface is displayed in a preset effect, wherein
the preset effect indicates that the terminal device is in a collaboration-unachievable state.

23. A multi-device networking method, applied to a first terminal device, and comprising:
displaying a first interface, wherein the first interface comprises a plurality of terminal device identifiers, the plurality of terminal device identifiers comprise an identifier of a second terminal device and an identifier of a third terminal device, and the second terminal device and the third terminal device are connected; and
detecting a first operation on the first interface, and sending a first indication message to the second terminal device in response to the first operation, wherein the first indication message indicates the third terminal device to collaborate with the second terminal device.

24. The method according to claim 23, wherein the method further comprises:
displaying a second interface when determining that the second terminal device and the third terminal device have collaborated, wherein the second interface indicates that the second terminal device and the third terminal device have collaborated.

25. The method according to claim 24, wherein the method further comprises:
receiving, from the second terminal device, information indicating that the second terminal device fails to collaborate with the third terminal device, and determining, based on the collaboration failure information, that the second terminal device fails to collaborate with the third terminal device; and
displaying a seventh interface when determining that the second terminal device fails to collaborate with the third terminal device, wherein the seventh interface indicates that the second terminal device fails to collaborate with the third terminal device.

26. The method according to claim 23 or 24, wherein the method further comprises:
displaying a fifth interface, wherein the fifth interface comprises a plurality of terminal device identifiers, the plurality of terminal device identifiers comprise an identifier of a fourth terminal device and an identifier of a fifth terminal device, and the fourth terminal device and the fifth terminal device are connected;
detecting a third operation on the fifth interface, wherein the third operation indicates the fourth terminal device to collaborate with the fifth terminal device; and
displaying a sixth interface when determining that collaboration between the fourth terminal device and the fifth terminal device is unachievable, wherein the sixth interface indicates that the fourth terminal device fails to collaborate with the fifth terminal device.

27. A multi-device networking method, applied to a second terminal device, and comprising:
receiving a first indication message sent by a first terminal device, wherein the first indication message indicates the second terminal device to collaborate with a third terminal device; and
collaborating with the third terminal device based on the first indication message.

28. A multi-device networking method, applied to a first terminal device, and comprising:
displaying a first interface, wherein the first interface comprises a plurality of terminal device identifiers, the plurality of terminal device identifiers comprise an identifier of the second terminal device and an identifier of a third terminal device, and the second terminal device and the third terminal device are connected;
detecting a first operation on the first interface, wherein the first operation indicates the second terminal device to collaborate with the third terminal device; and
displaying a seventh interface when determining that collaboration between the second terminal device and the third terminal device is unachievable, wherein the seventh interface indicates that the second terminal device fails to collaborate with the third terminal device.

29. The method according to claim 28, wherein the determining that collaboration between the second terminal device and the third terminal device is unachievable comprises:
determining, based on one or more of a device type of the second terminal device, a device status of the second terminal device, a device type of the third terminal device, or a device status of the third terminal device, that collaboration between the second terminal device and the third terminal device is unachievable.

30. A first terminal device, comprising one or more processors and one or more memories, wherein
the one or more memories are configured to store one or more computer programs and data information, and the one or more computer programs comprise instructions; and
when the instructions are executed by the one or more processors, the first terminal device is enabled to perform the method according to any one of claims 23 to 26, or perform the method according to claim 28 or 29.

31. A second terminal device, comprising one or more processors and one or more memories, wherein
the one or more memories are configured to store one or more computer programs and data information, and the one or more computer programs comprise instructions; and
when the instructions are executed by the one or more processors, the second terminal device is enabled to perform the method according to claim 27.

32. A computer-readable storage medium, wherein the computer-readable storage medium is configured to store a computer program, and when the computer program is run on a computer, the computer is enabled to perform the method according to any one of claims 23 to 26, or perform the method according to claim 27, or perform the method according to claim 28 or 29.
